# EUROPEAN PATENT APPLICATION

(11) **EP 4 192 137 A1**
(43) Date of publication of application: **07.06.2023**
(21) Application number: 21857745.0
(22) Date of filing: 19.08.2021
(51) Int. Cl.: H04W 56/00

(54) **TIME SYNCHRONIZATION FAILURE PROCESSING METHOD, APPARATUS AND SYSTEM, AND STORAGE MEDIUM**

(30) Priority: 20.08.2020 CN 202010843351
(71) Applicant: Huawei Technologies Co., Ltd., Shenzhen, Guangdong 518129 (CN)
(72) Inventor: LYU, Jingfei, Shenzhen, Guangdong 518129 (CN); YU, Fang, Shenzhen, Guangdong 518129 (CN); FAN, Boling, Shenzhen, Guangdong 518129 (CN)
(74) Representative: Gill Jennings & Every LLP
(86) International application number: PCT/CN2021/113588
(87) International publication number: WO 2022/037654

(57) **Abstract**

This application discloses a method, an apparatus, and a system for processing a time synchronization fault, and a storage medium, and belongs to the communications field. The method includes: when time of a first translator in a first network is not synchronized with a clock source that is in the first network, stopping sending, to a device communicating with the first translator, time synchronized with a clock source that is in a second network, where the device is located in the second network. In this application, incorrect time is not obtained for synchronization.

## Description

This application claims priority to Chinese Patent Application No. 202010843351.4 on August 20, 2020 and entitled "METHOD, APPARATUS, AND SYSTEM FOR PROCESSING TIME SYNCHRONIZATION FAULT", which is incorporated herein by reference in its entirety.

### TECHNICAL FIELD

This application relates to the communications field, and in particular, to a method, an apparatus, and a system for processing a time synchronization fault and a storage medium.

### BACKGROUND

Currently, time sensitive network (time sensitive network, TSN) services may be carried on a 5G network. The 5G network is connected to a plurality of TSN devices, and is required to support transfer of time of the TSN device. For example, a first TSN device is connected to a first translator that is in the 5G network, and a second TSN device is connected to a second translator that is in the 5G network. In this case, the 5G network needs to transfer, to the second TSN device, time sent by the first TSN device.

The 5G network further includes a grandmaster (grandmaster, 5G GM), both the first translator and the second translator perform time synchronization with the 5G GM, and the first TSN device performs time synchronization with a TSN clock source. The first TSN device sends a packet 1 to the first translator, where the packet 1 includes first time synchronized with the TSN clock source. The first translator sends, to the second translator via the 5G network, a packet 2 including the first time, receiving time of receiving the packet 1, and a first transmission delay, and the first transmission delay is a transmission delay between the first TSN device and the first translator. When the second translator needs to send a packet 3, the second translator calculates a second transmission delay based on the receiving time and current time. The second translator accumulates the first time, the first transmission delay, and the second transmission delay to obtain second time, and sends the packet 3 including the second time to the second TSN device.

In a process of implementing this application, the inventor finds that a current technology has at least the following problems.

A time synchronization fault may occur on a translator. Consequently, time of the translator cannot be synchronized with time of the 5G GM, and the second time received by a TSN device is incorrect time. For example, it is assumed that the first translator or the second translator cannot synchronize with the time of the 5G GM, and the second transmission delay calculated by the second translator is inaccurate. Consequently, the second time accumulated by the second translator is also inaccurate, and the second TSN device receives the incorrect time.

### SUMMARY

This application provides a method, an apparatus, and a system for processing a time synchronization fault and a storage medium, so as to avoid obtaining incorrect time. The technical solutions are as follows.

According to a first aspect, this application provides a method for processing a time synchronization fault. In the method, when time of a first translator in a first network is not synchronized with a clock source that is in the first network, sending time to a device communicating with the first translator is stopped, where the time is synchronized with a clock source that is in a second network, and the device is located in the second network. Because sending the time to the device is stopped, where the time is synchronized with the clock source that is in the second network, the device does not receive incorrect time, to prevent the device from obtaining the incorrect time. When the device is an end station, the device does not adjust local time of the device based on the incorrect time, so that a synchronization error is avoided.

In a possible implementation, the second network includes a first subnet and a second subnet, the device is located in the first subnet or the second subnet, the clock source in the second network is located in the second subnet, and the first network is connected to the first subnet and the second subnet.

In another possible implementation, the second network is a time sensitive network TSN.

In another possible implementation, the first network is a 5G network.

In another possible implementation, sending a first packet to the device is stopped, where a type of the first packet is an announce Announce packet, a synchronization Sync packet, or a follow up Follow _up packet. In this way, sending the first packet is stopped, so that sending the time to the device is stopped, where the time is synchronized with the clock source that is in the second network.

In another possible implementation, a port status of a port that is on the first translator and that communicates with the device is set to a first status, where the first status is a faulty state, a listening state, a disabled state, or a specified state. In this way, the port can be prevented from sending the first packet to the device.

In another possible implementation, a fault identifier is sent to a configuration device that is in the first network, where the fault identifier indicates that the time of the first translator is not synchronized with the clock source that is in the first network. The first status sent by the configuration device based on the fault identifier is received. The port status of the port that is on the first translator and that communicates with the device is set to the first status, so as to prevent the port from sending the first packet to the device.

In another possible implementation, the fault identifier is further used by the configuration device to set a status of a port on a second translator in the first network to a slave Slave state. In this way, the second translator may obtain, through the port in the Slave state, the time synchronized with the clock source that is in the second network, so that the first network may further send, via the second translator to another device that is in the second network, the time synchronized with the clock source, so that the another device in the second network may also be synchronized with the clock source.

In another possible implementation, a second packet is received, where the second packet is used by the first translator to perform time synchronization with the clock source that is in the first network, and whether the time of the first translator is synchronized with the clock source that is in the first network is determined based on the second packet. In this way, it can be determined whether the first translator is synchronized with the clock source that is in the first network.

In another possible implementation, the second packet includes a clock class. When the clock class is lower than a first threshold, it is determined that the time of the first translator is not synchronized with the clock source that is in the first network. In this way, it is determined whether the first translator is synchronized with the clock source that is in the first network.

In another possible implementation, the second packet includes a clock class identifier, and whether a clock class is lower than a first threshold is determined based on the clock class identifier. When the clock class is lower than the first threshold, it is determined that the time of the first translator is not synchronized with the clock source that is in the first network. In this way, it is determined whether the first translator is synchronized with the clock source that is in the first network.

In another possible implementation, the second packet is a packet carrying time information. When a time deviation that is between the first translator and the clock source in the first network and that is obtained through calculation based on the second packet exceeds a second threshold, it is determined that the time of the first translator is not synchronized with the clock source that is in the first network. In this way, it is determined whether the first translator is synchronized with the clock source that is in the first network.

In another possible implementation, when the first translator does not obtain a second packet within a timeout interval, it is determined that the time of the first translator is not synchronized with the clock source that is in the first network, where the second packet is used by the first translator to perform time synchronization with the clock source that is in the first network.

In another possible implementation, a recovery identifier is sent to the configuration device that is in the first network, where the recovery identifier indicates that time recovery of the first translator is synchronized with the clock source that is in the first network, and the recovery identifier is used by the configuration device to configure a port status of a port on each translator that is in the first network.

According to a second aspect, this application provides a method for processing a time synchronization fault. In the method, when a first translator in a first network does not receive, within a timeout interval, a first packet sent by a second translator that is in the first network, sending time to a device communicating with the first translator is stopped, where the time is synchronized with a clock source that is in a second network, the device is located in the second network, and a type of the first packet includes an announce Announce packet, a synchronization Sync packet, or a follow up Follow _Up packet. Because sending the time to the device is stopped, where the time is synchronized with the clock source that is in the second network, when the first translator does not receive, within the timeout interval, the first packet sent by the second translator that is in the first network, the first translator knows how to perform processing. In addition, because sending the time to the device is stopped, where the time is synchronized with the clock source that is in the second network, the device does not receive incorrect time. When the device is an end station, the device does not adjust local time of the device based on the incorrect time, so that a synchronization error is avoided.

In a possible implementation, sending a second packet to the device is stopped, where a type of the second packet is an announce Announce packet, a synchronization Sync packet, or a follow up Follow_Up packet. In this way, sending the second packet is stopped, so that sending the time to the device is stopped, where the time is synchronized with the clock source that is in the second network.

In another possible implementation, a port status of a port that is on the first translator and that communicates with the device is set to a first status, where the first status is a faulty state, a listening state, a disabled state, or a specified state, so as to prevent the port from sending the second packet to the device.

In another possible implementation, a fault identifier is sent to a configuration device that is in the first network, where the fault identifier indicates that time of the first translator is not synchronized with the clock source that is in the first network. The first status sent by the configuration device based on the fault identifier is received. The port status of the port that is on the first translator and that communicates with the device is set to the first status, so as to prevent the port from sending the first packet to the device.

In another possible implementation, the fault identifier is further used by the configuration device to set a status of a port on a third translator in the first network to a slave Slave state. In this way, the third translator may obtain, through the port in the Slave state, the time synchronized with the clock source that is in the second network, so that the first network may further send, via the third translator to another device that is in the second network, the time synchronized with the clock source, so that the another device in the second network may also be synchronized with the clock source.

According to a third aspect, this application provides a method for processing a time synchronization fault. In the method, when time of a control device of a first translator is not synchronized with a clock source that is in a first network, the control device of the first translator controls the first translator to stop sending, to a device communicating with the first translator, time synchronized with a clock source that is in a second network, where the device is located in the second network. Because sending the time to the device is stopped, where the time is synchronized with the clock source that is in the second network, the device does not receive incorrect time, to prevent the device from obtaining the incorrect time. When the device is an end station, the device does not adjust local time of the device based on the incorrect time, so that a synchronization error is avoided.

In a possible implementation, the first translator is controlled to stop sending a first packet to the device, where a type of the first packet is an announce Announce packet, a synchronization Sync packet, or a follow up Follow _up packet. In this way, sending the first packet is stopped, so that sending the time to the device is stopped, where the time is synchronized with the clock source that is in the second network.

In another possible implementation, a control message is sent to the first translator, where the control message indicates the first translator to set a port status of a port communicating with the device to a first status, where the first status is a faulty state, a listening state, a disabled state, or a specified state. In this way, the port can be prevented from sending the first packet to the device.

In another possible implementation, a fault identifier is sent to a configuration device that is in the first network, where the fault identifier indicates that time of the first translator is not synchronized with the clock source that is in the first network. A configuration command sent by the configuration device based on the fault identifier is received, where the configuration command includes the first status. The control message is sent to the first translator based on the configuration command.

In another possible implementation, a second packet is received, where the second packet is used by the control device to perform time synchronization with the clock source that is in the first network, and whether the time of the control device is synchronized with the clock source that is in the first network is determined based on the second packet.

According to a fourth aspect, this application provides a method for processing a time synchronization fault. In the method, a configuration device receives a fault identifier, where the fault identifier indicates that time of a first translator in a first network is not synchronized with a clock source that is in the first network, or indicates that time of a control device of the first translator is not synchronized with the clock source that is in the first network. The configuration device sends a configuration command based on the fault identifier, where the configuration command includes a first status, the configuration command is used to set a port status of a port that is on the first translator and that communicates with a device to the first status, so as to prevent the port from sending, to the device, time synchronized with a clock source that is in a second network, and the device is located in the second network. In this way, the device does not receive incorrect time, to prevent the device from obtaining the incorrect time. When the device is an end station, the device does not adjust local time of the device based on the incorrect time, so that a synchronization error is avoided.

In a possible implementation, a status of a port on a second translator in the first network is set to a slave Slave state based on the fault identifier. In this way, the second translator may obtain, through the port in the Slave state, the time synchronized with the clock source that is in the second network, so that the first network may further send, via the second translator to another device that is in the second network, the time synchronized with the clock source, so that the another device in the second network may also be synchronized with the clock source.

In another possible implementation, a recovery identifier is received, where the recovery identifier indicates that time recovery of the first translator is synchronized with the clock source that is in the first network, or indicates that the time of the control device of the first translator is not synchronized with the clock source that is in the first network; and a port status of a port on each translator in the first network is configured based on the recovery identifier.

According to a fifth aspect, this application provides an apparatus for processing a time synchronization fault, configured to perform the method in any one of the first aspect or the possible implementations of the first aspect. Specifically, the apparatus includes units configured to perform the method in any one of the first aspect or the possible implementations of the first aspect.

According to a sixth aspect, this application provides an apparatus for processing a time synchronization fault, configured to perform the method in any one of the second aspect or the possible implementations of the second aspect. Specifically, the apparatus includes units configured to perform the method in any one of the second aspect or the possible implementations of the second aspect.

According to a seventh aspect, this application provides an apparatus for processing a time synchronization fault, configured to perform the method in any one of the third aspect or the possible implementations of the third aspect. Specifically, the apparatus includes units configured to perform the method in any one of the third aspect or the possible implementations of the third aspect.

According to an eighth aspect, this application provides an apparatus for processing a time synchronization fault, configured to perform the method in any one of the fourth aspect or the possible implementations of the fourth aspect. Specifically, the apparatus includes units configured to perform the method in any one of the fourth aspect or the possible implementations of the fourth aspect.

According to a ninth aspect, this application provides an apparatus for processing a time synchronization fault. The apparatus includes a transceiver, a processor, and a memory. The transceiver, the processor, and the memory may be connected through an internal connection. The memory is configured to store a program, instructions, or code. The processor is configured to execute the program, the instructions, or the code in the memory and cooperate with the transceiver, so that the apparatus completes the method in any one of the first aspect or the possible implementations of the first aspect.

According to a tenth aspect, this application provides an apparatus for processing a time synchronization fault. The apparatus includes a transceiver, a processor, and a memory. The transceiver, the processor, and the memory may be connected through an internal connection. The memory is configured to store a program, instructions, or code. The processor is configured to execute the program, the instructions, or the code in the memory and cooperate with the transceiver, so that the apparatus completes the method in any one of the second aspect or the possible implementations of the second aspect.

According to an eleventh aspect, this application provides an apparatus for processing a time synchronization fault. The apparatus includes a transceiver, a processor, and a memory. The transceiver, the processor, and the memory may be connected through an internal connection. The memory is configured to store a program, instructions, or code. The processor is configured to execute the program, the instructions, or the code in the memory and cooperate with the transceiver, so that the apparatus completes the method in any one of the third aspect or the possible implementations of the third aspect.

According to a twelfth aspect, this application provides an apparatus for processing a time synchronization fault. The apparatus includes a transceiver, a processor, and a memory. The transceiver, the processor, and the memory may be connected through an internal connection. The memory is configured to store a program, instructions, or code. The processor is configured to execute the program, the instructions, or the code in the memory and cooperate with the transceiver, so that the apparatus completes the method in any one of the fourth aspect or the possible implementations of the fourth aspect.

According to a thirteenth aspect, this application provides a computer program product. The computer program product includes a computer program stored in a computer-readable storage medium, and the computer program is loaded by a processor to implement the method in any one of the first aspect, the second aspect, the third aspect, the fourth aspect, the possible implementations of the first aspect, the possible implementations of the second aspect, the possible implementations of the third aspect, or the possible implementations of the fourth aspect.

According to a fourteenth aspect, this application provides a computer-readable storage medium, configured to store a computer program. The computer program is loaded by a processor to execute instructions for the method in any one of the first aspect, the second aspect, the possible implementations of the first aspect, or the possible implementations of the second aspect.

According to a fifteenth aspect, this application provides a system for processing a time synchronization fault. The system includes the apparatus according to the fifth aspect and the apparatus according to the eighth aspect, or the system includes the apparatus according to the sixth aspect and the apparatus according to the eighth aspect, or the system includes the apparatus according to the seventh aspect and the apparatus according to the eighth aspect, or the system includes the apparatus according to the ninth aspect and the apparatus according to the twelfth aspect, or the system includes the apparatus according to the tenth aspect and the apparatus according to the twelfth aspect, or the system configuration includes the apparatus according to the eleventh aspect and the apparatus according to the twelfth aspect.

### BRIEF DESCRIPTION OF DRAWINGS

FIG. 1 is a schematic diagram of a network architecture according to an embodiment of this application;
FIG. 2 is a schematic diagram of another network architecture according to an embodiment of this application;
FIG. 3 is a schematic diagram of another network architecture according to an embodiment of this application;
FIG. 4 is a flowchart of a synchronization method according to an embodiment of this application;
FIG. 5 is a flowchart of another synchronization method according to an embodiment of this application;
FIG. 6 is a flowchart of another synchronization method according to an embodiment of this application;
FIG. 7 is a schematic diagram of another network architecture according to an embodiment of this application;
FIG. 8 is a flowchart of a method for processing a time synchronization fault according to an embodiment of this application;
FIG. 9 is a flowchart of another method for processing a time synchronization fault according to an embodiment of this application;
FIG. 10 is a flowchart of another method for processing a time synchronization fault according to an embodiment of this application;
FIG. 11 is a schematic diagram of a structure of an apparatus for processing a time synchronization fault according to an embodiment of this application;
FIG. 12 is a schematic diagram of a structure of another apparatus for processing a time synchronization fault according to an embodiment of this application;
FIG. 13 is a schematic diagram of a structure of another apparatus for processing a time synchronization fault according to an embodiment of this application;
FIG. 14 is a schematic diagram of a structure of another apparatus for processing a time synchronization fault according to an embodiment of this application;
FIG. 15 is a schematic diagram of a structure of another apparatus for processing a time synchronization fault according to an embodiment of this application;
FIG. 16 is a schematic diagram of a structure of another apparatus for processing a time synchronization fault according to an embodiment of this application;
FIG. 17 is a schematic diagram of a structure of another apparatus for processing a time synchronization fault according to an embodiment of this application;
FIG. 18 is a schematic diagram of a structure of a system for processing a time synchronization fault according to an embodiment of this application; and
FIG. 19 is a schematic diagram of a structure of another system for processing a time synchronization fault according to an embodiment of this application.

### DESCRIPTION OF EMBODIMENTS

The following further describes in detail implementations of this application with reference to accompanying drawings.

In embodiments of this application, terms including a port of a translator, a port dataset of a translator, a port status of a translator, an optimal dataset, a port number of a translator, and a clock class are all applicable to the precision time protocol (precision time protocol, PTP) (IEEE 1588 protocol and a corresponding 1588 profile, for example, IEEE 802.1AS).

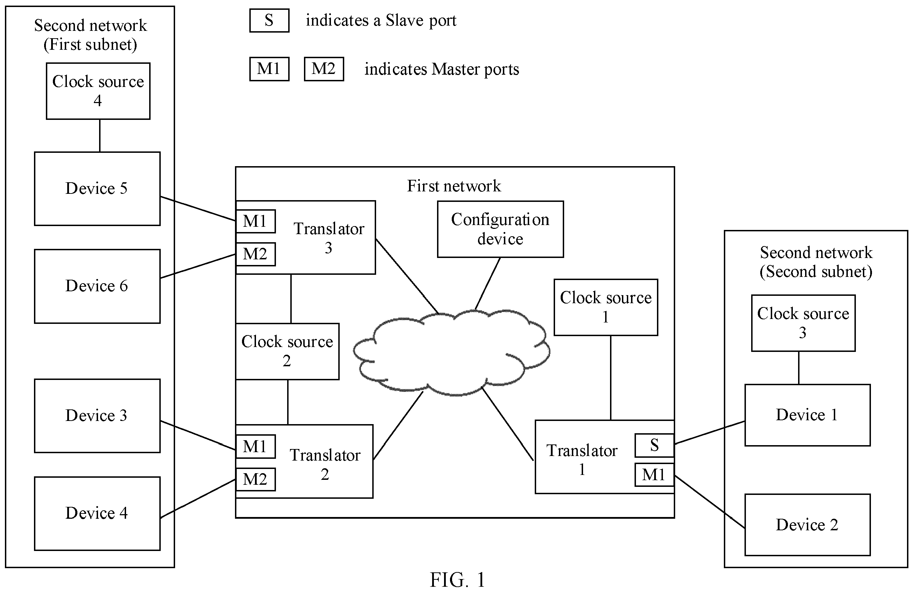

Refer to FIG. 1. An embodiment of this application provides a network architecture. The network architecture includes a first network and a second network.

The first network includes a plurality of translators and at least one clock source. For each translator in the first network, a network connection is established between the translator and one clock source that is in the first network, and the translator performs time synchronization with the clock source. When the first network includes a plurality of clock sources, time of the plurality of clock sources in the first network is also synchronized.

The second network includes a plurality of devices and at least one clock source, and each device in the second network may communicate with one translator that is in the first network. Each of the at least one clock source may establish a network connection to one or more devices that are in the second network.

In the at least one clock source in the second network, one clock source is a primary clock source of the second network, and other clock sources are secondary clock sources. To be specific, when the second network includes a plurality of clock sources, one of the plurality of clock sources is a primary clock source, other clock sources are secondary clock sources, and a clock class of the primary clock source is higher than or equal to a clock class of the secondary clock source. When the second network includes one clock source, the clock source is a primary clock source.

A network connection is established between a device in the second network and the primary clock source that is in the second network. For the device that establishes the network connection to the primary clock source that is in the second network, the device may perform time synchronization with the primary clock source that is in the second network, or may not perform time synchronization with the primary clock source that is in the second network. The device may send, to another device that is in the second network via a translator that is in the first network, time synchronized with the primary clock source that is in the second network. When any another device establishes a network connection to a clock source that is in the second network, the another device may perform, based on the time, time synchronization with the primary clock source that is in the second network, or the device may perform time synchronization with the clock source instead of performing, based on the time, time synchronization with the primary clock source that is in the second network.

Optionally, an implementation in which the device in the second network communicates with the translator that is in the first network includes: establishing a network connection between the device and the translator, or directly connecting the device to the translator. The network connection may be a wireless connection, a wired connection, or the like.

For example, the first network includes a translator 1, a translator 2, a translator 3, a clock source 1, and a clock source 2, and time between the clock source 1 and the clock source 2 may be generally synchronized. A network connection is established between the translator 1 and the clock source 1, and the translator 1 performs time synchronization with the clock source 1. A network connection is established between the translator 2 and the clock source 2, a network connection is also established between the translator 3 and the clock source 2, and both the translator 2 and the translator 3 perform time synchronization with the clock source 2. Therefore, time between the translator 1, the translator 2, and the translator 3 is synchronized.

The second network includes a device 1, a device 2, a device 3, a device 4, a device 5, a device 6, a clock source 3, and a clock source 4. The clock source 3 is a primary clock source (located in a second subnet of the second network) of the second network, and the clock source 4 is a secondary clock source (located in a first subnet of the second network) of the second network. The device 1 and the device 2 in the second network communicate with the translator 1, the device 3 and the device 4 in the second network communicate with the translator 2, and the device 5 and the device 6 in the second network communicate with the translator 3. A network connection is established between the device 1 and the primary clock source 3. A network connection is established between the device 5 and the secondary clock source 4.

A network connection may be established between the translator 1 and the translator 2, and a network connection may be established between the translator 1 and the translator 3. The device 1 may send, to the device 2 via the translator 1, time synchronized with the primary clock source 3 that is in the second network, may send, to the device 3 and the device 4 via the translator 1 and the translator 2, the time synchronized with the primary clock source 3 that is in the second network, and may send, to the device 5 and the device 6 via the translator 1 and the translator 3, the time synchronized with the primary clock source 3 that is in the second network. The device 2, the device 3, the device 4, the device 5, and the device 6 may all perform, based on the time, time synchronization with the primary clock source 3 that is in the second network. Alternatively, the device 5 does not perform, based on the time, time synchronization with the primary clock source 3 that is in the second network, but performs time synchronization with the secondary clock source 4 that is in the second network.

For each translator in the first network, the translator includes at least one port, and the at least one port is a PTP port.

Optionally, an implementation in which the device in the second network communicates with the translator that is in the first network includes: A network connection is established between the device and a port that is on the translator, or the device is connected to the port that is on the translator.

A translator in the first network includes a port in a slave (Slave) state, and another port on the translator may be a port in a master (Master) state. A port on another translator in the first network may also be a port in a Master state. The device that establishes the network connection to the primary clock source that is in the second network communicates with the port in the Slave state on the translator.

The port in the slave state may be configured to receive the time synchronized with the primary clock source that is in the second network. The port in the Master state may be configured to send the time synchronized with the primary clock source that is in the second network. Therefore, the device that establishes the network connection to the primary clock source that is in the second network may send, to another device that is in the second network via the translator that is in the first network, the time synchronized with the primary clock source that is in the second network.

For example, refer to FIG. 1. Only the translator 1 in the first network includes the port in the Slave state, and another port on the translator 1 is a port in the Master state. Ports on the translator 2 and the translator 3 in the first network are also ports in the Master state. The device 1 that establishes the network connection to the primary clock source 3 that is in the second network sends, to the device 2, the device 3, the device 4, the device 5, and the device 6 that are in the second network via the translator 1, the translator 2, and the translator 3 that are in the first network, the time synchronized with the primary clock source 3 that is in the second network.

Optionally, the first network is a 4G network, a 5G network, or the like. The second network may be a TSN network, an electrical network, or the like. A device in the second network may be a TSN device or an electrical device.

Optionally, the second network includes the first subnet and the second subnet. The first network is connected to the first subnet and the second subnet, the primary clock source in the second network is located in the second subnet, and the device that establishes the network connection to the primary clock source that is in the second network is also located in the second subnet.

Optionally, the clock source in the first network is a 5G GM. Any translator in the first network is a network-side time sensitive network translator (network-side time sensitive network translator, NW-TT) or a device-side time sensitive network translator (device-side time sensitive network translator, DS-TT).

Optionally, the clock source in the second network is a TSN GM. A device in the second network is an end station (end station), a TSN bridge (TSN bridge), or the like.

Optionally, in the second network, one or more devices may be connected, via the TSN bridge, to a translator that is in the first network. The TSN bridge may be configured to forward a packet sent by the translator to the one or more devices, or forward a packet sent by the one or more devices to the translator.

Optionally, any translator in the first network may be an independent device or a dedicated device, or is a module and is integrated into a device. When the translator is the module and is integrated into the device, "the translator includes at least one port" means that the device in which the translator is located includes at least one port.

Optionally, the first network further includes devices such as user equipment (user equipment, UE) and a user plane function (user plane function, UPF).

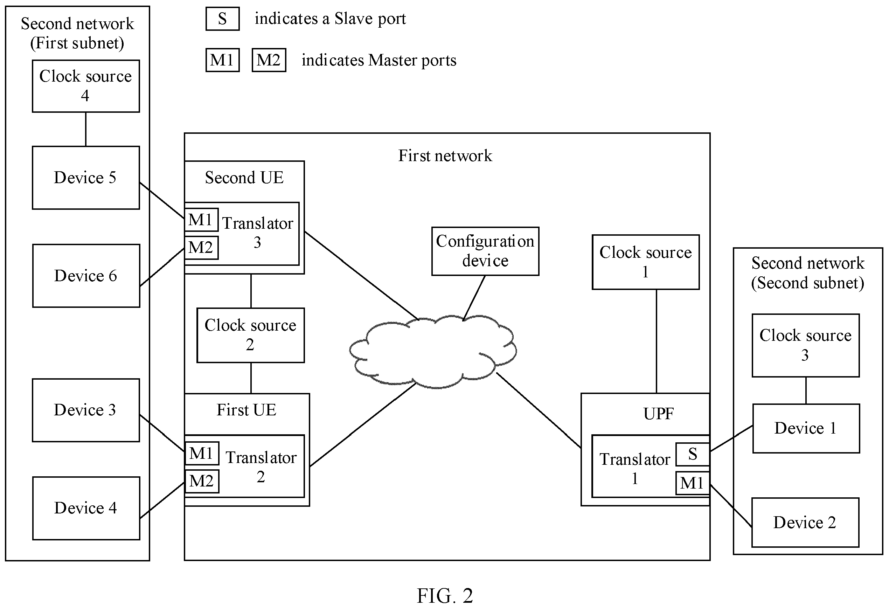

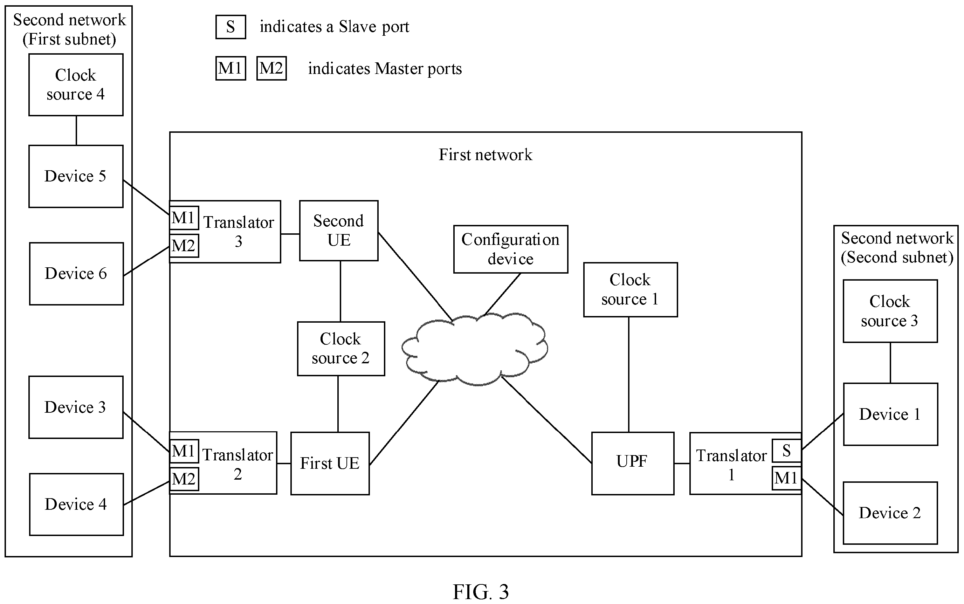

Optionally, refer to FIG. 2. One or more translators may be integrated into the UE, and/or one or more translators may be integrated into the UPF. For example, in FIG. 2, a translator 1 is integrated into the UPF, a translator 2 is integrated into first UE, and a translator 3 is integrated into second UE. Alternatively,
optionally, refer to FIG. 3. The UE may communicate with one or more translators, and/or the UPF may communicate with one or more translators. For example, in FIG. 3, a translator 1 communicates with the UPF, a translator 2 communicates with first UE, and a translator 3 communicates with second UE.

Optionally, refer to FIG. 2. The translator integrated into the UPF may be an NW-TT, and the translator integrated into the UE may be a DS-TT. Alternatively, refer to FIG. 3. The translator communicating with the UPF may be an NW-TT, and the translator communicating with the UE may be a DS-TT.

Optionally, refer to FIG. 1 to FIG. 3. The first network further includes a configuration device, and the configuration device may be configured to manage the translator that is in the first network.

Optionally, the configuration device is an independent device, or is integrated into one translator (not shown in the figure) that is in the first network, or is located in a same device (not shown in the figure) with one or more translators that are in the first network. When the first network is a 5G network, the configuration device may be a 5th generation mobile communication technology general precision time protocol (5g-general precise time protocol, 5g-gPTP) device.

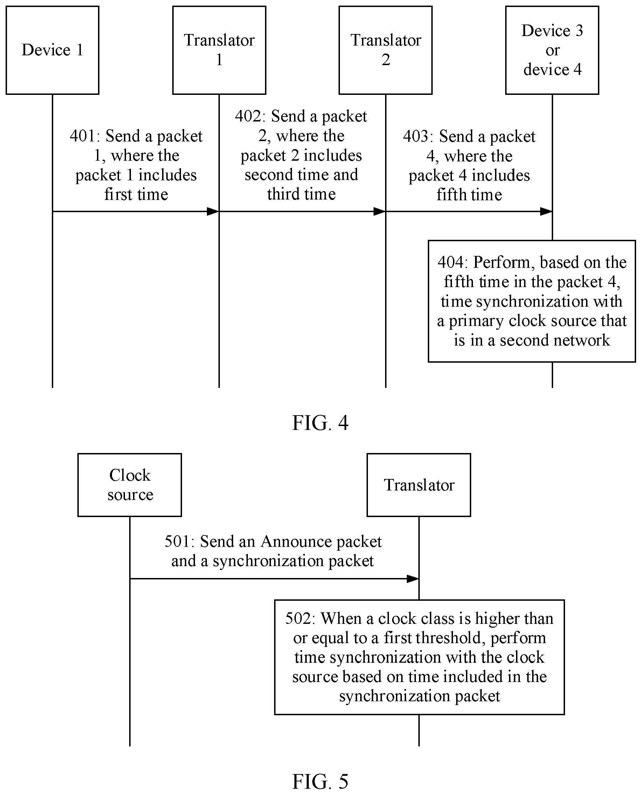

In the network architecture in FIG. 1, the network connection is established between the device 1 in the second network and the primary clock source 3 in the second network. The device 1 sends the time synchronized with the primary clock source 3, so that another device in the second network performs time synchronization with the primary clock source 3. Refer to FIG. 4. A synchronization process may be as follows.

Step 401: The device 1 sends a packet 1 to the translator 1, where the packet 1 includes first time, and the first time is synchronized with time of the primary clock source 3 that is in the second network.

Optionally, the first time is time, of the primary clock source 3 in the second network, at which the device 1 sends the packet 1.

Optionally, a type of the packet 1 includes a synchronization (Sync) packet, a follow up (Follow_up) packet, or the like.

A local clock of the device 1 is synchronized with the primary clock source 3 that is in the second network. The device 1 obtains current time generated by the local clock of the device 1 as the first time, and sends the packet 1 including the first time. Because the local clock of the device 1 is synchronized with the primary clock source 3, the first time is synchronized with current time of the primary clock source 3. Alternatively, the device 1 receives a time packet that includes time of the primary clock source 3 and that is sent by the primary clock source 3 that is in the second network, and the device 1 calculates a transmission delay of the time packet transmitted from the primary clock source 3 to the device 1. When needing to send the packet 1, the device 1 calculates a time difference between time of receiving the time packet and current time, accumulates the time included in the time packet, the transmission delay, and the time difference to obtain the first time, where the first time is synchronized with the current time of the primary clock source 3, and sends the packet 1 including the first time.

That the time is synchronized with the primary clock source 3 means: The time is the same as the time of the primary clock source 3, or a time difference between the time and the time of the primary clock source 3 is less than a difference threshold. For example, that the first time is synchronized with the current time of the primary clock source 3 means: The first time is the same as the current time of the primary clock source 3, or a time difference between the first time and the current time of the primary clock source 3 is less than the difference threshold.

Step 402: The translator 1 receives the packet 1, and sends a packet 2 to another translator that is in the first network, where the packet 2 includes second time and third time, the second time is time synchronized, when the translator 1 receives the packet 1, with the primary clock source 3 that is in the second network, and the third time is time, of the translator 1, at which the translator 1 receives the packet 1.

The translator 1 receives the packet 1 through a port in a Slave state, and obtains a first transmission delay when receiving the packet 1, where the first transmission delay is a delay of transmitting the packet 1 from the device 1 to the translator 1, and accumulates the first transmission delay and the first time to obtain the second time, where the second time is the same as the current time of the primary clock source 3 that is in the second network, or a time difference between the second time and the current time of the primary clock source 3 in the second network is less than the difference threshold.

A local clock of the translator 1 performs time synchronization with a clock source 1 that is in the first network. When receiving the packet 1, the translator 1 obtains current time generated by the local clock of the translator 1 as the third time.

A type of the packet 2 is the same as the type of the packet 1, in other words, the type of the packet 2 includes a Sync packet, a Follow _up packet, or the like.

Optionally, the translator 1 may further include a port in a Master state, and the port in the Master state may communicate with a device other than the device 1 in the second network. When the translator 1 needs to send a packet 3 to the another device, the translator 1 obtains the current time of the local clock of the translator 1, calculates a forwarding delay of the translator 1 based on the current time and the third time, and accumulates the forwarding delay and the second time to obtain fourth time synchronized with the primary clock source 3. The translator 1 further sends the packet 3 to another device through the port in the Master state, and the packet 3 includes the fourth time. The another device receives the packet 3. When the another device is a TSN bridge, the TSN bridge sends the packet 3 to a device connected to the TSN bridge. When the another device is a TSN end station, the another device performs, based on the fourth time in the packet 3, time synchronization with the primary clock source 3 that is in the second network.

It should be noted that a destination address of the packet 2 sent by the translator 1 to another translator is an address of the another translator. A source port number of the packet 2 sent by the translator 1 to the another device through the port in the Master state is a port number of the port in the Master state, and a source address is an address of the port in the Master state.

For example, refer to FIG. 1 to FIG. 3. The translator 1 sends the packet 2 to the translator 2, and sends the packet 2 to the translator 3. The translator 1 includes a port 1 (M1 in the figure) in the Master state. The port 1 in the Master state may communicate with a device 2 that is in the second network. When sending the packet 3 to the device 2, the translator 1 obtains the current time generated by the local clock of the translator 1, calculates a forwarding delay of the translator 1 based on the current time and the third time, accumulates the forwarding delay and the second time to obtain the fourth time synchronized with the primary clock source 3, and sends the packet 3 to the device 2 through the port 1 in the Master state, where the packet 3 includes the fourth time. The device 2 receives the packet 3, and may perform, based on the fourth time included in the packet 3, the time synchronization with the primary clock source 3 that is in the second network. A destination address of the packet 2 sent by the translator 1 to the translator 2 is an address of the translator 2. A destination address of the packet 2 sent to the translator 3 is an address of the translator 3. A source port number of the packet 2 sent to the device 2 is a port number of the port 1 in the Master state, and a source address is an address of the port 1 in the Master state.

Optionally, when receiving the packet 1, the translator 1 may not accumulate the first time and the first transmission delay, but includes the first time, the first transmission delay, and the third time in the sent packet 2, and includes the first time, the first transmission delay, and the forwarding delay in the sent packet 3. The device 2 receives the packet 3, and accumulates the first time, the first transmission delay, and the forwarding delay in the packet 3 to obtain the fourth time synchronized with the primary clock source 3.

Step 403: The translator 2 receives the packet 2, and sends a packet 4 to a device communicating with the translator 2, where the packet 4 includes fifth time, the fifth time is time synchronized, when the translator 2 sends the packet 4, with the primary clock source 3 that is in the second network, and the translator 2 is a translator other than the translator 1 in the second network.

In this step, a local clock of the translator 2 performs time synchronization with the clock source 2 that is in the first network. After receiving the packet 2, when the translator 2 needs to send the packet 4 to the device communicating with the translator 2, the translator 2 obtains current time generated by the local clock of the translator 2 as sixth time. The packet 2 includes the second time and the third time. A second transmission delay is calculated based on the third time and the sixth time, where the second transmission delay is a time difference from time at which the translator 1 receives the packet 2 to current time. The second transmission delay and the second time are accumulated to obtain the fifth time currently synchronized with the primary clock source 3 that is in the second network. The translator 2 includes a port in a Master state, and the translator 2 sends, through the port in the Master state, the packet 4 including the fifth time to a device communicating with the translator 2.

For example, refer to FIG. 1 to FIG. 3. The translator 2 includes a port 1 (M1 in the figure) in the Master state and a port 2 (M2 in the figure) in the Master state. The translator 2 sends, through the port 1 in the Master state, the packet 4 to a device 3 communicating with the translator 2, and sends, through the port 2 in the Master state, the packet 4 to a device 4 communicating with the translator 2. The device 3 receives the packet 4, and performs, based on the fifth time in the packet 4, time synchronization with the primary clock source 3 that is in the second network. The device 4 performs an operation similar to that of the device 3. A source port number of the packet 4 sent to the device 3 is a port number of the port 1 in the Master state, and a source address is an address of the port 1 in the Master state. A source port number of the packet 4 sent to the device 4 is a port number of the port 2 in the Master state, and a source address is an address of the port 2 in the Master state.

Optionally, if the packet 2 includes the first time, the third time, and the first transmission delay, when the translator 2 needs to send the packet 4, the translator 2 obtains the current time generated by the local clock of the translator 2 as the sixth time. The second transmission delay is calculated based on the third time and the sixth time. The translator 2 sends, through the port in the Master state, the packet 4 to the device communicating with the translator 2, where the packet 4 includes the first time, the first transmission delay, and the second transmission delay. The device receives the packet 4, accumulates the first time, the first transmission delay, and the second transmission delay that are in the packet 4 to obtain the fifth time, and performs, based on the fifth time, time synchronization with the primary clock source 3 that is in the second network.

It should be noted that the clock source 1 and the clock source 2 in the first network may be a same device, or may be different devices. When the clock source 1 and the clock source 2 in the first network are different devices, time of the clock source 1 and time of the clock source 2 are generally synchronized. The local clock of the translator 1 is synchronized with the clock source 1 that is in the first network, and the local clock of the translator 2 is synchronized with the clock source 2 that is in the first network. Therefore, the third time obtained by the translator 1 and the sixth time obtained by the translator 2 both refer to a same clock source. The second transmission delay calculated based on the third time and the sixth time is the time difference between the time at which the translator 1 receives the packet 2 and the current time at which the translator 2 needs to send the packet 4, and precision of the second transmission delay is high. Therefore, the second transmission delay and the second time are accumulated to obtain the fifth time. The fifth time is time synchronized, when the translator 2 sends the packet 4, with the primary clock source 3 that is in the second network. To be specific, when the translator 2 sends the packet 4, the fifth time is the same as current time of the primary clock source 3 that is in the second network, or a time difference between the fifth time and current time of the primary clock source 3 in the second network is less than the difference threshold.

For a translator other than the translator 1 and the translator 2 in the first network, the translator also performs a same operation as that performed by the translator 2.

For example, refer to FIG. 1 to FIG. 3. The translator 3 in the first network receives the packet 2, and sends a packet 5 to a device communicating with the translator 3, where the packet 5 includes seventh time, and the seventh time is time synchronized, when the translator 3 needs to send the packet 5, with the primary clock source 3 that is in the second network. During implementation,
a local clock of the translator 3 performs time synchronization with the clock source 2 that is in the first network. When the translator 3 needs to send the packet 5, the translator 3 obtains current time generated by the local clock of the translator 3 as eighth time. The packet 2 includes the second time and the third time. A third transmission delay is calculated based on the third time and the eighth time, where the third transmission delay is a time difference between the time at which the translator 1 receives the packet 2 and the current time at which the translator 3 needs to send the packet 5. The third transmission delay and the second time are accumulated to obtain the seventh time.

The translator 3 includes a port 1 (M1 in the figure) in a Master state and a port 2 (M2 in the figure) in a Master state. The translator 3 sends, through the port 1 in the Master state, the packet 5 to a device 5 communicating with the translator 3, and sends, through the port 2 in the Master state, the packet 5 to a device 6 communicating with the translator 3. A source port number of the packet 5 sent to the device 5 is a port number of the port 1 in the Master state, and a source address is an address of the port 1 in the Master state. A source port number of the packet 5 sent to the device 6 is a port number of the port 2 in the Master state, and a source address is an address of the port 2 in the Master state.

It should be noted that a type of the packet 3, a type of the packet 4, and a type of the packet 5 are all the same as the type of the packet 2, in other words, the type of the packet 3, the type of the packet 4, and the type of the packet 5 include a Sync packet, a Follow_up packet, or the like.

Step 404: The device communicating with the translator 2 receives the packet 4, and performs, based on the fifth time in the packet 4, time synchronization with the primary clock source that is in the second network.

Optionally, the device communicating with the translator 2 is an end station. The device may be directly connected to the translator 2, and the device receives the packet 4 sent by the translator 2. Alternatively, the device may communicate with the translator 2 via the TSN bridge, and the device receives the packet 4 that is from the translator 2 and that is forwarded by the TSN bridge.

For example, refer to FIG. 1 to FIG. 3. The device 3 receives the packet 4, and performs, based on the fifth time in the packet 4, time synchronization with the primary clock source 3 that is in the second network. In addition, the device 4 receives the packet 4, and performs, based on the fifth time in the packet 4, time synchronization with the primary clock source 3 that is in the second network.

Similarly, for a translator other than the translator 1 and the translator 2 in the first network, a device communicating with the translator also performs, as the device 3 and the device 4 do, time synchronization with the primary clock source that is in the second network. For example, refer to FIG. 1 to FIG. 3. For the device 5 and the device 6 that communicate with the translator 3, the device 5 receives the packet 5, and performs, based on the seventh time in the packet 5, time synchronization with the primary clock source 3 that is in the second network, and the device 6 receives the packet 5, and performs, based on the seventh time in the packet 5, time synchronization with the primary clock source 3 that is in the second network.

It should be noted that, for the device 5 that establishes a network connection to the secondary clock source 4 that is in the second network, the device 5 may alternatively perform time synchronization with the secondary clock source 4 instead of the primary clock source 3 that is in the second network.

It should be further noted that, for any one of the device 3, the device 4, the device 5, and the device 6, if the device is a TSN bridge, when receiving a packet (the packet 4 or the packet 5), the TSN bridge sends the packet to a device that is in the second network and that is connected to the TSN bridge.

It should be noted that time of the translator 1 and time of the translator 2 both need to be synchronized with the clock source that is in the first network. In this way, it can be ensured that the translator 2 accurately calculates the second transmission delay and further accurately calculates the fifth time, so that the device connected to the translator 2 obtains the correct fifth time, and then performs, based on the fifth time, time synchronization with the primary clock source 3 that is in the second network, and no time synchronization error occurs.

Therefore, each translator in the first network needs to perform time synchronization with the clock source that is in the first network. A network connection is established between the translator and the clock source that is in the first network. Between the translator and the clock source, the network connection may pass through at least one network device, or may not pass through a network device.

Optionally, refer to FIG. 5. When a network connection does not pass through a network device, a process in which a translator performs time synchronization with a clock source that is in a first network may be as follows.

Step 501: The clock source in the first network sends an announce (Announce) packet and a synchronization packet to the translator through the network connection, where the Announce packet includes clock class information of the clock source, and the synchronization packet includes time of the clock source.

Optionally, the clock class information may be a clock class of the clock source or a clock class identifier that indicates the clock class.

Optionally, the clock class identifier indicates whether the clock class is lower than a first threshold, and one bit may indicate whether the clock class is lower than the first threshold. The bit is the clock class identifier. For example, a bit 1 may indicate that the clock class is lower than the first threshold, and a bit 0 may indicate that the clock class is not lower than the first threshold.

Optionally, a type of the synchronization packet includes a Sync packet, a Follow_up packet, a delay request (delay_request, Delay _Req) packet, a delay response (delay_response, Delay_Resp) packet, a peer delay request (peer delay_request, Pdelay_Req) packet, a peer delay response (peer delay_response, Pdelay_Resp) packet, or a peer delay response follow up (peer delay_response _follow_up, Pdelay_Resp_Follow_up) packet.

Optionally, if the clock class of the clock source is higher than or equal to the first threshold, it indicates that the clock source is normal. If the clock class of the clock source is lower than the first threshold, it indicates that the clock source is abnormal.

For example, it is assumed that the first threshold is 6. In one case, a larger value of the clock class indicates a higher clock class. If the clock class of the clock source is class 6 or higher, it indicates that the clock class of the clock source is higher than or equal to the first threshold, and a status of the clock source is normal. If the clock class of the clock source is lower than class 6, it indicates that the clock class of the clock source is lower than the first threshold, and a status of the clock source is abnormal.

In another case, a smaller value of the clock class indicates a higher clock class. If the clock class of the clock source is class 6 or lower, it indicates that the clock class of the clock source is equal to or higher than the first threshold, and a status of the clock source is normal. If the clock class of the clock source is higher than class 6, it indicates that the clock class of the clock source is lower than the first threshold, and a status of the clock source is abnormal.

Optionally, when the clock source is faulty, the clock class included in the Announce packet sent by the clock source may be lower than the first threshold.

For example, refer to FIG. 1 to FIG. 3. For the translator 1 in the first network, a clock source that establishes a network connection to the translator 1 is the clock source 1 that is in the first network. The clock source 1 sends an Announce packet and/or a synchronization packet to the translator 1, where the Announce packet includes clock class information of the clock source 1, and the synchronization packet includes time of the clock source 1.

Step 502: The translator receives the Announce packet and the synchronization packet, determines the clock class based on the clock class information in the Announce packet, and when the clock class is higher than or equal to the first threshold, performs time synchronization with the clock source based on the time included in the synchronization packet.

Optionally, when the clock class information is the clock class, an operation of determining the clock class is reading the clock class from the Announce packet. When the clock class information is the clock class identifier, the translator directly determines, based on the clock class identifier, whether the clock class is lower than the first threshold.

Optionally, when the clock class is lower than the first threshold, the translator does not perform time synchronization with the time source.

For example, refer to FIG. 1 to FIG. 3. The translator 1 receives the Announce packet and the synchronization packet, and when a clock class determined based on the clock class information in the Announce packet is higher than or equal to the first threshold, performs time synchronization with the clock source based on the time included in the synchronization packet.

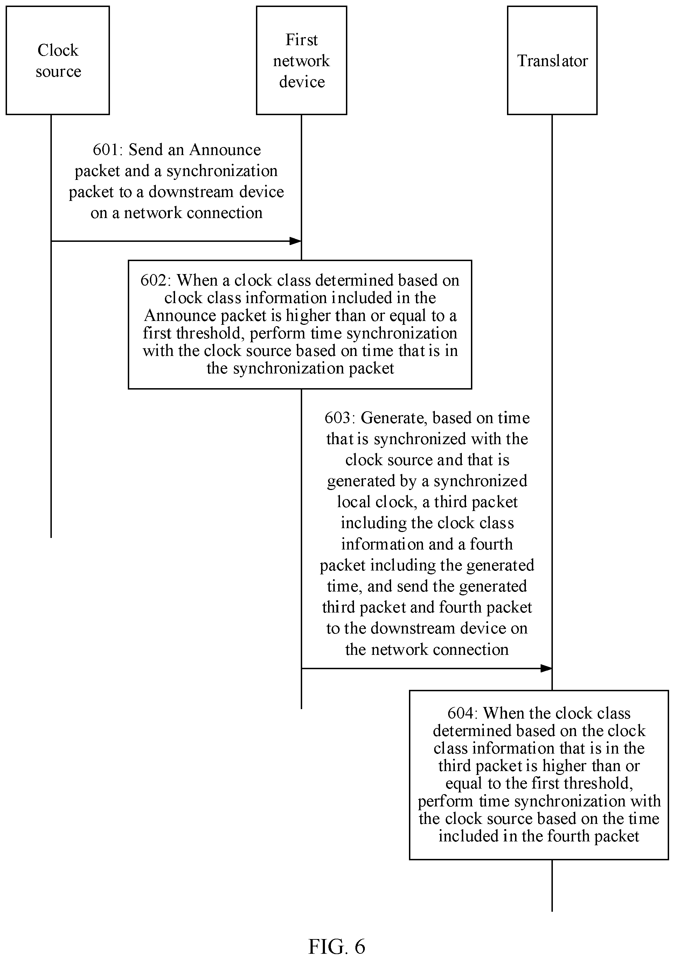

Optionally, refer to FIG. 6. When a network connection passes through at least one network device, a process in which a translator performs time synchronization with a clock source that is in a first network may be as follows.

Step 601: The clock source in the first network sends an Announce packet and a synchronization packet to a downstream device on the network connection, where the Announce packet includes clock class information of the clock source, and the synchronization packet includes time of the clock source.

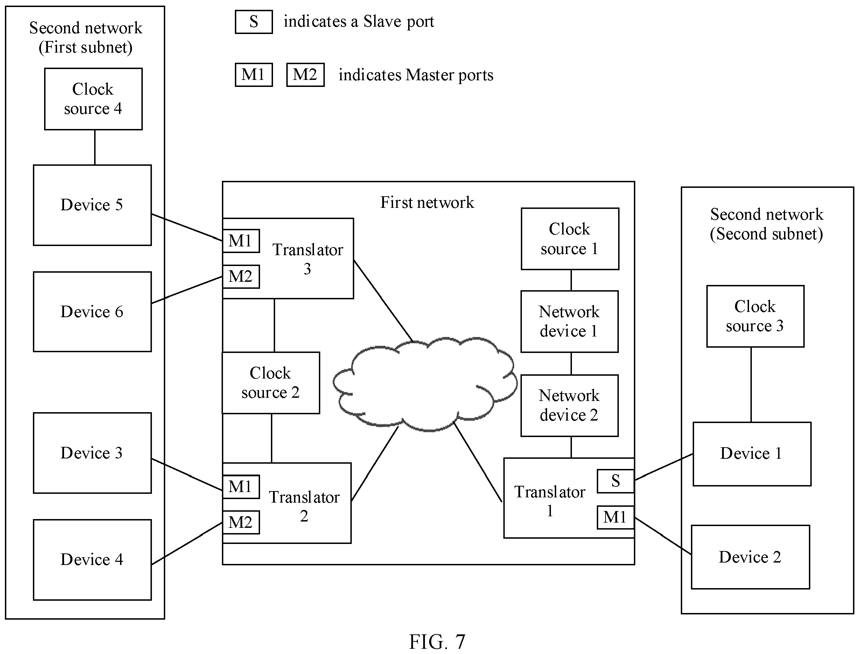

For example, refer to FIG. 7. It is assumed that the translator is a translator 1 that is in the first network. A network connection is established between the translator 1 and a clock source 1 that is in the first network, and the network connection passes through a network device 1 and a network device 2. The clock source 1 sends an Announce packet and a synchronization packet on the network connection, where the Announce packet includes clock class information of the clock source, and the synchronization packet includes time of the clock source.

Step 602: A first network device receives the Announce packet and the synchronization packet on the network connection, and when a clock class determined based on the clock class information included in the Announce packet is higher than or equal to a first threshold, performs time synchronization with the clock source based on the time that is in the synchronization packet, and performs step 603.

The first network device is any network device that the network connection between the clock source and the first translator passes through.

Optionally, when the clock class determined based on the clock class information included in the Announce packet is lower than the first threshold, the first network device generates time, where the time may have a large deviation from the time of the clock source. The first network device generates a third packet including the clock class information and a fourth packet including the generated time, and sends the generated third packet and fourth packet to a downstream device on the network connection.

A type of the third packet may be an Announce packet, and a type of the fourth packet may be a synchronization packet. Alternatively, a type of the third packet and a type of the fourth packet may be packet types defined in a communication protocol used between the first network device and the translator.

It should be noted that a reason why the clock class determined by the first network device based on the clock class information that is in the Announce packet is lower than the first threshold may be: A second network device does not receive the Announce packet and the synchronization packet on the network connection within a timeout interval, and the second network device is a network device that is between the clock source and the first network device and that the network connection passes through. After the timeout interval ends, the second network device generates time based on a local clock, where the time may have a large deviation from the time of the clock source, and generates an Announce packet including clock class information of the second network device and a synchronization packet including the generated time, where the clock class information of the second network device is a clock class identifier of a clock class of the second network device or a clock class identifier that indicates a clock fault of the second network device, and the clock class of the second network device is lower than the first threshold. The second network device sends the generated Announce packet and synchronization packet to a downstream device on the network connection.

For example, refer to FIG. 7. It is assumed that the first network device is the network device 2, and the second network device is the network device 1. If the network device 1 does not receive the Announce packet and the synchronization packet within the timeout interval, the network device 1 generates time based on a local clock, where the time may have a large deviation from the time of the clock source, and generates an Announce packet including clock class information of the network device 1 and a synchronization packet including the generated time, where the clock class information is a clock class of the network device 1 or a clock class identifier that indicates the clock class of the network device 1, and the clock class of the network device 1 is lower than the first threshold. The network device 1 sends the generated Announce packet and synchronization packet to a downstream device (the network device 2). The network device 2 receives the Announce packet and the synchronization packet. In this case, the clock class determined by the network device 2 based on the clock class information included in the Announce packet is lower than the first threshold.

A reason why the second network device does not receive the Announce packet and the synchronization packet within the timeout interval may be: A link between the second network device and an upstream device of the second network device is faulty.

Optionally, that the second network device does not receive the Announce packet and the synchronization packet on the network connection within the timeout interval means: Duration in which the second network device does not receive the Announce packet and the synchronization packet exceeds a length of the timeout interval. A moment, of the second network device, when the timeout interval ends may be a moment at which duration in which the second network device does not receive the Announce packet and the synchronization packet reaches the length of the timeout interval. Meaning of the timeout interval in the following content is not described one by one again.

Step 603: The first network device generates, based on time that is synchronized with the clock source and that is generated by a synchronized local clock, the third packet including the clock class information and the fourth packet including the generated time, and sends the generated third packet and fourth packet to the downstream device on the network connection.

When receiving packets (the Announce packet and the synchronization packet, or the third packet and the fourth packet), another network device that the network connection between the clock source and the translator passes through performs a same operation as the first network device. An upstream device connected to the translator also performs the same operation as the first network device, and sends, to the translator, the third packet including the clock class information and the fourth packet including time generated by the upstream device.

For example, refer to FIG. 7. The network device 1 receives the Announce packet and the synchronization packet on the network connection, where the clock class determined based on the clock class information included in the Announce packet is higher than or equal to the first threshold. Therefore, the network device 1 performs time synchronization with the clock source based on the time included in the synchronization packet, generates, based on the local clock, the time synchronization with the clock source, generates a third packet 1 including the clock class information and a fourth packet 1 including the generated time, and sends the generated third packet 1 and fourth packet 1 on the network connection.

The network device 2 (which is an upstream device of the translator 1) receives the third packet 1 and the fourth packet 1 on the network connection. When the clock class determined based on the clock class information included in the third packet 1 is higher than or equal to the first threshold, the network device 2 performs time synchronization with the clock source based on the time included in the fourth packet 1, generates, based on a local clock, time synchronized with the clock source, generates a third packet 2 including the clock class information and a fourth packet 2 including the generated time, and sends, on the network connection, the third packet 2 including the clock class information and the fourth packet 2 including the generated time.

Step 604: The translator receives the third packet and the fourth packet, and when the clock class determined based on the clock class information in the third packet is higher than or equal to the first threshold, performs time synchronization with the clock source based on the time included in the fourth packet.

Optionally, when the clock class determined based on the clock class information that is in the third packet is less than the first threshold, the translator stops performing time synchronization with the clock source.

For example, refer to FIG. 7. The translator 1 receives the third packet 2 and the fourth packet 2, and when the clock class determined based on the clock class information included in the third packet 2 is higher than or equal to the first threshold, performs time synchronization with the clock source based on the time included in the fourth packet 2.

For another example, it is assumed that a link between the network device 1 and the clock source 1 is faulty, and consequently, the network device 1 does not receive the Announce packet and the synchronization packet within the timeout interval. After the timeout interval ends, the network device 1 generates time based on the local clock, where the time may have a large deviation from time of the clock source 1, and generates the third packet 1 including the clock class information of the network device 1 and the fourth packet 1 including the generated time, where the clock class of the network device 1 is lower than the first threshold. The network device 1 sends the generated third packet 1 and fourth packet 1 on the network connection. In this way, the clock class information included in the third packet 2 sent by the network device 2 is also the clock class information of the network device 1, and the time included in the sent fourth packet 2 may also have a large deviation from the time of the clock source 1. In this way, the translator 1 does not perform time synchronization with the clock source 1.

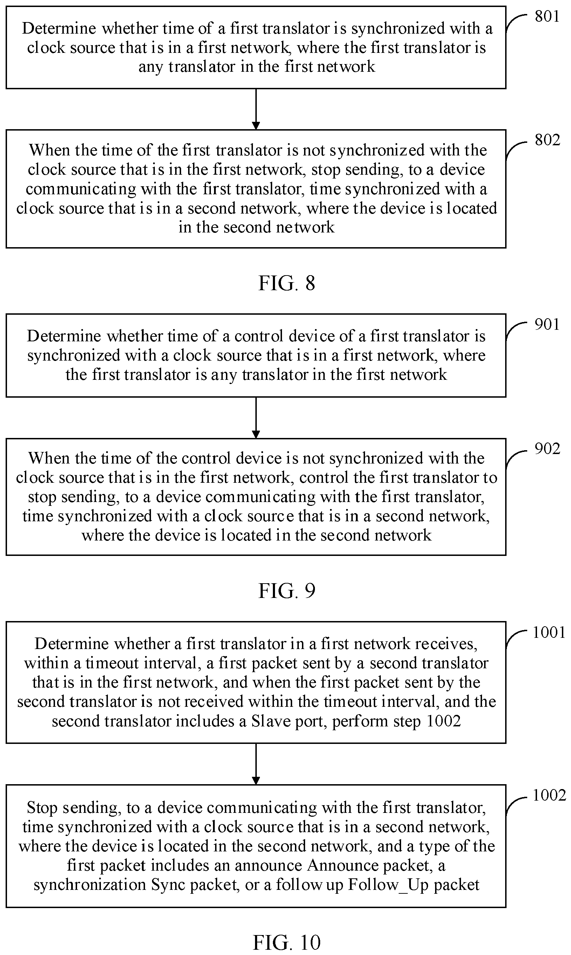

Refer to FIG. 8. An embodiment of this application provides a method for processing a time synchronization fault. The method may be applied to the network architecture shown in FIG. 1, FIG. 2, FIG. 3, or FIG. 7. The method may be performed by any translator in a first network, a device in which the translator is located, or a device that is in the first network and that is connected to the translator. The method includes the following steps.

Step 801: Determine whether time of a first translator is synchronized with a clock source that is in the first network, where the first translator is any translator in the first network.

The first translator may be any translator (which may be an NW-TT or a DS-TT) in the first network. The first translator may include or not include a port in a Slave state.

In this step, whether the time of the first translator is synchronized with the clock source that is in the first network may be determined in the following two manners. The two manners are respectively as follows.

In a first manner, at least one second packet is received, where each second packet is used by the first translator to perform time synchronization with the clock source that is in the first network, and whether the time of the first translator is synchronized with the clock source that is in the first network is determined based on the at least one second packet.

The at least one second packet includes clock class information, time, and/or the like. The clock class information may be clock class information of the clock source that is in the first network, or may not be the clock class information of the clock source. The time may or may not be synchronized with time of the clock source.

A type of the second packet includes an Announce packet, a Sync packet, a Follow_up packet, a Delay_Req packet, a Delay_Resp packet, a Pdelay_Req packet, a Pdelay_Resp packet, or a Pdelay_Resp_Follow_up packet. Alternatively, a type of the second packet is the foregoing third packet or fourth packet.

A network connection is established between the first translator and the clock source that is in the first network. Between the first translator and the clock source, the network connection may pass through at least one network device, or may not pass through a network device.

When the network connection does not pass through a network device, the received at least one second packet is an Announce packet and/or a synchronization packet that are/is sent by the clock source to the first translator.

For example, refer to FIG. 1 to FIG. 3. It is assumed that the first translator is the translator 1, and a clock source that establishes a network connection to the translator 1 is the clock source 1 that is in the first network. The clock source 1 sends an Announce packet and/or a synchronization packet to the translator 1, where the Announce packet includes clock class information of the clock source 1, and the synchronization packet includes time of the clock source 1. In this case, the received at least one second packet is the Announce packet and/or the synchronization packet that are/is sent by the clock source 1 to the translator 1.

When the network connection passes through at least one network device, the received at least one second packet includes the third packet and/or the fourth packet sent by an upstream device connected to the first translator.

For example, refer to FIG. 7. It is assumed that the first translator is the translator 1 that is in the first network, and the received at least one second packet includes a third packet 2 and/or a fourth packet 2 that are/is sent by the network device 2 (an upstream device connected to the translator 1).

Optionally, after the at least one second packet is received, an operation of determining, based on the at least one second packet, whether the time of the first translator is synchronized with the clock source that is in the first network may be:
when the at least one second packet includes a packet including the clock class information, determining a clock class based on the clock class information included in the packet; and when the clock class is lower than a first threshold, determining that the time of the first translator is not synchronized with the clock source that is in the first network; and/or
when the at least one second packet includes a packet including the clock class information, when the clock class information is "not synchronized", determining that the time of the first translator is not synchronized with the clock source that is in the first network; and/or
when the at least one second packet includes a packet including the time, calculating, based on the packet, a time deviation between the first translator and the clock source that is in the first network, and when the time deviation exceeds a second threshold, determining that the time of the first translator is not synchronized with the clock source that is in the first network.

Optionally, time generated when the first translator receives the packet including the time may be obtained, and the time deviation between the first translator and the clock source that is in the first network is calculated based on the time included in the packet and the time generated by the first translator.

A reason why the time deviation exceeds the second threshold may be that: a module that is of the first translator and that is configured to perform time synchronization is faulty, and consequently the time deviation between the first translator and the clock source exceeds the second threshold; or a module that is of the upstream device of the first translator and that is configured to perform time synchronization is faulty, and consequently the time deviation between the first translator and the clock source exceeds the second threshold.

In a second manner, when the first translator does not obtain a second packet within a timeout interval, it is determined that the time of the first translator is not synchronized with the clock source that is in the first network, where the second packet is used by the first translator to perform time synchronization with the clock source that is in the first network.

When an upstream device is not the clock source, the second packet may be a third packet and/or a fourth packet sent by the upstream device connected to the first translator, and a type of the second packet includes an Announce packet, a Sync packet, a Follow_up packet, a Delay_Req packet, a Delay_Resp packet, a Pdelay_Req packet, a Pdelay_Resp packet, or a Pdelay_Resp_Follow_up packet. Alternatively, a type of the second packet is the foregoing third packet or fourth packet.

When an upstream device is the clock source, the second packet may be an Announce packet and/or a synchronization packet sent by the clock source connected to the first translator, to be specific, a type of the second packet in the second manner includes an Announce packet, a Sync packet, a Follow_up packet, a Delay_Req packet, a Delay_Resp packet, a Pdelay_Req packet, a Pdelay_Resp packet, or a Pdelay_Resp Follow_up packet.

A reason why the first translator does not obtain the second packet within the timeout interval may be: A link between the first translator and the upstream device connected to the first translator is faulty, and consequently, the packet sent by the upstream device cannot be transmitted to the first translator through the link.

Step 802: When the time of the first translator is not synchronized with the clock source that is in the first network, stop sending, to a device communicating with the first translator, time synchronized with a clock source that is in a second network, where the device is located in the second network.

Optionally, the clock source in the second network in this step is a primary clock source in the second network.

When the device is an end station, when receiving the time synchronized with the clock source that is in the second network, the device performs, based on the time, time synchronization with the clock source that is in the second network. When the device is a TSN bridge, after receiving the time synchronized with the clock source that is in the second network, the device sends, to another device that is in the second network and that is connected to the device, the time synchronized with the clock source that is in the second network.

Optionally, the clock source in the second network is located in a second subnet of the second network. The device communicating with the first translator is located in a first subnet or the second subnet of the second network.

Optionally, in this step, sending a first packet to the device is stopped, where a type of the first packet includes an Announce packet, a Sync packet, or a Follow _up packet.

Optionally, when the type of the first packet is the Announce packet, sending the Announce packet to the device is stopped. Because the Announce packet includes a clock class, when the device does not receive the Announce packet, even if the device receives the Sync packet or the Follow_up packet that includes the time synchronized with the clock source that is in the second network, the device does not perform, based on the Sync packet or the Follow _up packet, time synchronization with the clock source that is in the second network. In this way, an effect of stopping sending, to the device communicating with the first translator, the time synchronized with the clock source that is in the second network is achieved.

For example, refer to the network architectures shown in FIG. 1 to FIG. 3. It is assumed that the first translator is the translator 1, and sending the first packet to the device 1 and the device 2 is stopped, where the device 1 and the device 2 communicate with ports of the translator 1. In this case, the first packet is the Announce packet or the packet 3 in the embodiment shown in FIG. 4, and the packet 3 is the Sync packet or the Follow_up packet.

For example, refer to the network architectures shown in FIG. 1 to FIG. 3. It is assumed that the first translator is the translator 2, and sending the first packet to the device 3 and the device 4 is stopped, where the device 3 communicates with the port 1 in a Master state of the translator 2, and the device 4 communicates with the port 2 in a Master state of the translator 2. In this case, the first packet is the Announce packet or the packet 4 in the embodiment shown in FIG. 4, and the packet 4 is the Sync packet or the Follow_up packet. For another example, it is assumed that the first translator is the translator 3, and sending the first packet to the device 5 and the device 6 is stopped, where the device 5 communicates with the port 1 in a Master state of the translator 3, and the device 6 communicates with the port 2 in a Master state of the translator 3. In this case, the first packet is the Announce packet or the packet 5 in the embodiment shown in FIG. 4, and the packet 5 is the Sync packet or the Follow_up packet.

Optionally, there may be a network connection between the device and the clock source (which may be a primary clock source or may be a secondary clock source) that is in the second network. When stopping sending the first packet (Announce packet, sync packet, or Follow _up packet) to the device, the device may be forced to perform time synchronization with the clock source through the network connection, to avoid obtaining incorrect time from the first translator. In this way, a synchronization error generated based on the incorrect time is avoided, or the device avoids sending the incorrect time to another device that is connected to the device and that is in the second network, to prevent the another device from generating a synchronization error based on the incorrect time. For example, the device is the device 5 in FIG. 3, and the translator 3 stops sending the first packet to the device 5, so that the device 5 may be forced to synchronize with the clock source 4, to avoid obtaining incorrect time from the translator 3 for synchronization.

Optionally, there is no network connection between the device and the clock source that is in the second network. When sending the first packet (Announce packet, sync packet, or Follow_up packet) to the device is stopped, the device does not perform time synchronization, and continues to use time of the device, so as to avoid obtaining incorrect time from the first translator for synchronization, and avoid a synchronization error. Alternatively, the device stops sending time to another device that is connected to the device and that is in the second network, so as to prevent the another device from generating a synchronization error based on the incorrect time. For example, the device is the device 6 in FIG. 3, the translator 3 stops sending the first packet to the device 6, and the device 6 may use time of the device 6 to avoid obtaining incorrect time from the translator 3 for synchronization.

Optionally, in this step, a port status of a port that is on the first translator and that communicates with the device is set to a first status, so as to prevent the port from sending the first packet to the device, where the first status is a faulty state, a listening state, a disabled state, or a specified state.

The first translator includes at least one port, and the at least one port includes a port in a Slave state and/or a port in a Master state. In this step, the port in the Slave state and/or the port in the Master state included in the first translator are/is set to the first status.

It should be noted that, when the port included in the first translator is set to the first status, when the first status is the disabled state or the faulty state, the port does not send any 1588 packet to the device connected to the port, and does not receive any 1588 packet sent by the device connected to the port.

For example, refer to FIG. 1, FIG. 2, FIG. 3, or FIG. 7. It is assumed that the first translator is the translator 1, and the translator 1 includes the port 1 (M1 for short in the figure) in the Master state and the port (S for short in the figure) in the Slave state. Port statuses of the two ports are both set to disabled states or faulty states. The two ports of the translator 1 do not send any 1588 packet to the device 1 and the device 2, and do not receive any 1588 packet. For another example, it is assumed that the first translator is the translator 2, and the translator 2 includes the Master port 1 (M1 for short in the figure) and the Master port 2 (M2 for short in the figure). Port statuses of the two ports are both set to disabled states or faulty states. The two ports of the translator 2 do not send any 1588 packet to the device 3 and the device 4, and do not receive any 1588 packet.

The 1588 packet includes the Announce packet, Sync packet, Follow_up packet, Pdelay_Req packet, Pdelay_Resp packet, and Pdelay_Resp_Follow_up packet.

When the first status is the listening state, the port does not send the Announce packet, Sync packet, or Follow_Up packet to the device connected to the port, but may continue to send the Pdelay_Req, Pdelay_Resp, and Pdelay_Resp_Follow_Up packets to the device connected to the port; and/or the port does not receive the Announce packet, Sync packet, or Follow_Up packet sent by the device connected to the port, but may continue to receive the Pdelay_Req, Pdelay_Resp, and Pdelay_Resp Follow_Up packets sent by the device connected to the port.

For example, refer to FIG. 1, FIG. 2, FIG. 3, or FIG. 7. It is assumed that the first translator is the translator 1, and the translator 1 includes the port 1 (M1 for short in the figure) in the Master state and the port (S for short in the figure) in the Slave state. Port statuses of the two ports are both set to listening states. The two ports of the translator 1 do not send the Announce packet, Sync packet, or Follow_Up packet to the device 1 and the device 2, but may continue to send the Pdelay_Req, Pdelay_Resp, and Pdelay_Resp_Follow_Up packets to the device 1 and the device 2; and/or the two ports of the translator 1 do not receive the Announce packet, Sync packet, or Follow_Up packet that are sent by the device 1 and the device 2, but may continue to receive the Pdelay_Req, Pdelay_Resp, and Pdelay_Resp_Follow_Up packets that are sent by the device 1 and the device 2.

For another example, it is assumed that the first translator is the translator 2, and the translator 2 includes the port 1 (M1 for short in the figure) in the Master state and the port 2 (M2 for short in the figure) in the Master state. Port statuses of the two ports are both set to listening states. The two ports of the translator 2 do not send the Announce packet, Sync packet, or Follow_Up packet to the device 3 and the device 4, but may continue to send the Pdelay_Req, Pdelay_Resp, and Pdelay_Resp_Follow_Up packets to the device 3 and the device 4; and/or the two ports of the translator 2 do not receive the Announce packet, Sync packet, or Follow_Up packet sent by the device 3 and the device 4, but may continue to receive the Pdelay_Req, Pdelay_Resp, and Pdelay_Resp_Follow_Up packets sent by the device 3 and the device 4.

When the first status is the specified state, the port does not send the Announce packet, Sync packet, or Follow_Up packet to the device connected to the port; and/or the port does not receive the Announce packet, Sync packet, or Follow_Up packet sent by the device connected to the port. The specified state is a newly defined port status. When the port is set to the specified state, the port may not send the Pdelay_Req packet, Pdelay_Resp packet, or Pdelay_Resp_Follow_Up packet to the device connected to the port, or the port may send the Pdelay_Req, Pdelay_Resp, and Pdelay_Resp_Follow_Up packets to the device connected to the port; and/or the port may receive the Pdelay_Req packet, Pdelay_Resp packet, or Pdelay_Resp_Follow_Up packet sent by the device connected to the port, or the port may receive the Pdelay_Req, Pdelay_Resp, and Pdelay_Resp Follow_Up packets sent by the device connected to the port.

For example, still refer to FIG. 1, FIG. 2, FIG. 3, or FIG. 7. It is assumed that the first translator is the translator 1, and port statuses of the two ports included in the translator 1 are both set to specified states. The two ports of the translator 1 do not send the Announce packet, Sync packet, or Follow_Up packet to the device 1 and the device 2, but may or may not continue to send the Pdelay_Req packet, Pdelay_Resppacket, or Pdelay_Resp_Follow_Up packet to the device 1 and the device 2; and/or the two ports of the translator 1 do not receive the Announce packet, Sync packet, or Follow_Up packet sent by the device 1 and the device 2, but may or may not continue to receive the Pdelay_Req packet, Pdelay_Resp packet, or Pdelay_Resp_Follow_Up packet sent by the device 1 and the device 2.

For another example, it is assumed that the first translator is the translator 2, the translator 2 includes the two ports, and port statuses of the two ports are both set to specified states. The two ports of the translator 2 do not send the Announce packet, Sync packet, or Follow_Up packet to the device 3 and the device 4, but may or may not continue to send the Pdelay_Req packet, Pdelay_Resp packet, or Pdelay_Resp_Follow_Up packet to the device 3 and the device 4; and/or the two ports of the translator 2 do not receive the Announce packet, Sync packet, or Follow_Up packet sent by the device 3 and the device 4, but may or may not continue to receive the Pdelay_Req packet, Pdelay_Resp packet, or Pdelay_Resp_Follow_Up packet sent by the device 3 and the device 4.

When this step is performed by the first translator, the first translator stops sending, to the device communicating with the first translator, the time synchronized with the clock source that is in the second network. For example, refer to FIG. 1, FIG. 2, FIG. 3, or FIG. 7. It is assumed that the first translator is the translator 1, and the translator 1 stops sending, to the device 2 communicating with the translator 1, the time synchronized with the clock source that is in the second network. For another example, it is assumed that the first translator is the translator 2, and the translator 2 stops sending, to the device 3 and the device 4 that communicate with the translator 2, the time synchronized with the clock source that is in the second network. Alternatively,
this step is performed by a device in which the first translator is located. In this case, the first translator is a module integrated in the device, and the device controls the first translator to stop sending, to the device communicating with the first translator, the time synchronized with the clock source that is in the second network. For example, refer to FIG. 1, FIG. 2, FIG. 3, or FIG. 7. It is assumed that the first translator is the translator 1, the translator 1 is located on the UPF, and the UPF controls the translator 1 to stop sending, to the device 2 communicating with the translator 1, the time synchronized with the clock source that is in the second network. For another example, it is assumed that the first translator is the translator 2, the translator 2 is located on the first UE, and the first UE controls the translator 2 to stop sending, to the device 3 and the device 4 that communicate with the translator 2, the time synchronized with the clock source that is in the second network.

Optionally, in this step, a fault identifier is sent to a configuration device that is in the first network, where the fault identifier indicates that the time of the first translator is not synchronized with the clock source that is in the first network.

Optionally, in this step, there are the following two manners to set the port status of the port that is on the first translator and that communicates with the device to the first status. The two manners are respectively as follows.

In a first manner, the port status of the port that is on the first translator and that communicates with the device may be directly set to the first status.

Optionally, when the first translator includes a port in a Slave state, the fault identifier is further sent to the configuration device that is in the first network, where the fault identifier is used by the configuration device to set a status of a port on a second translator in the first network to a Slave state, and the second translator is a translator other than the first translator in the first network.

In a second manner, when triggered by the configuration device, the port status of the port that is on the first translator and that communicates with the device is set to the first status. During implementation,
the fault identifier may be first sent to the configuration device that is in the first network, and a configuration command sent by the configuration device based on the fault identifier is received, where the configuration command includes the first status; and the port status of the port that is on the first translator and that communicates with the device is set to the first status.

Optionally, the configuration device receives the fault identifier, and sends, when triggered by the fault identifier, the configuration command including the first status.

Optionally, the status of the port is configured as the first status. When the first translator includes a port in a Slave state, the configuration device further sets, when triggered by the fault identifier, a status of a port on a second translator in the first network to a Slave state. The second translator is a translator other than the first translator in the first network.

In the first manner or the second manner, an operation in which the configuration device sets the status of the port on the second translator in the first network to the Slave state may be as follows.

The configuration device may notify each translator other than the first translator in the first network. For each other translator, the other translator sends a port dataset of a port on the other translator to the configuration device. The configuration device receives the port dataset of the port on the other translator, and configures, based on the port dataset of the port on the other translator, a status of a port on one translator to a Slave state, where the translator is the second translator.

The port dataset of the port on the other translator includes a port identifier of the port, or a port identifier and a clock parameter that are of the port.

Optionally, the clock parameter is a PTP clock parameter. The port dataset of the port is a PTP port dataset.

Optionally, the clock parameter includes one or more of the following: domainNumber (domainNumber), MinorVersionPTP (MinorVersionPTP, version PTP), majorSdoId (majorSdoId), minorSdoId (minorSdoId), grandmasterPriority1 (grandmasterPriority1), grandmasterIdentity (grandmasterIdentity), grandmasterClockQuality (grandmasterClockQuality), grandmasterPriority2 (grandmasterPriority2), stepsRemoved (stepsRemoved), sourcePortIdentity (sourcePortIdentity), flags (flags), currentUtcOffset (currentUtcOffset), time Source (timeSource), and Path trace TLV (Path trace TLV).

Optionally, an operation in which the configuration device configures the status of the port on the translator to the Slave state may be: The configuration device selects an optimal dataset from the port dataset of the port on each other translator, and compares the optimal dataset with a preset dataset. When determining that the optimal dataset is better than the preset dataset, the configuration device determines that a port status of a port corresponding to the optimal dataset is the Slave state, that is, a translator in which the port is located is the second translator, and sets the status of the port on the second translator to the Slave state.

Optionally, the configuration device selects the optimal dataset by using a best master clock (best master clock, BMC) algorithm, and compares the optimal dataset with the preset dataset.

It should be noted that a device communicating with a port that is on the second translator may be connected to a clock source that is in the second network, where the clock source may be a primary clock source or a secondary clock source in the second network. Therefore, a port dataset of the port on the second translator is the optimal dataset, and the port is set to the port in the Slave state. Then, the device communicating with the port that is in the Slave state and that is on the second translator enables the device in the second network to perform time synchronization with the clock source that is in the second network according to the embodiment shown in FIG. 4.

For example, refer to FIG. 1, FIG. 2, FIG. 3, or FIG. 7. It is assumed that the first translator is the translator 1 including the port in the Slave state. The configuration device notifies the translator 2 and the translator 3. The translator 2 sends a port dataset 21 of the port 1 in the Master state and a port dataset 22 of the port 2 in the Master state to the configuration device, and the translator 3 sends a port dataset 31 of the port 1 in the Master state and a port dataset 32 of the port 2 in the Master state to the configuration device. The configuration device receives the four port datasets. Because the device 5 communicating with the port 1 in the Master state that is on the translator 3 is connected to the clock source 4 that is in the second network, the configuration device sets the port 1 in the Master state on the translator 3 to a Slave state. The device 5 performs time synchronization with the clock source 4, and according to the embodiment shown in FIG. 4, the device 3, the device 4, and the device 6 perform time synchronization with the clock source 4.

Optionally, when time recovery of the first translator in the first network is synchronized with the clock source that is in the first network, a recovery identifier is sent to the configuration device that is in the first network, where the recovery identifier indicates that time recovery of the first translator is synchronized with the clock source that is in the first network.

The configuration device receives the recovery identifier, and configures, based on the recovery identifier, a port status of a port on each translator that is in the first network. Optionally, during implementation,
the configuration device notifies the translator that is in the first network. For each translator in the first network, after receiving the notification, the translator sends port datasets of ports that are on the translator to the configuration device.

The configuration device receives port datasets of ports that are on the translator, and configures, based on the port datasets of the ports that are on the translator, a port status of a port on one translator in the first network to a Slave state, and a port status of another port on the translator to a Master state or another state. The configuration device configures port statuses of ports on another translator in the first network to a Master state or another state.

In this embodiment of this application, when the time of the first translator in the first network is not synchronized with the clock source that is in the first network, sending the time to the device communicating with the first translator is stopped, where the time is synchronized with the clock source that is in the second network. In this way, the device cannot receive the time synchronized with the clock source that is in the second network, and does not perform time synchronization with the clock source that is in the second network. Therefore, the device does not generate a time synchronization error, to avoid an error that occurs during time synchronization between the device and the clock source in the second network. Alternatively, the device does not send, to another device that is in the second network and that is connected to the device, the time synchronized with the clock source that is in the second network, so as to avoid an error that occurs during time synchronization between the another device and the clock source in the second network.

Refer to FIG. 9. An embodiment of this application provides a method for processing a time synchronization fault. The method may be applied to the network architecture shown in FIG. 1, FIG. 2, FIG. 3, or FIG. 7. The method may be performed by a control device of a translator. The control device is an upstream device that is in a first network and that is connected to the translator. The method includes the following steps.

Step 901: Determine whether time of a control device of a first translator is synchronized with a clock source that is in the first network, where the first translator is any translator in the first network.

The first translator may be any translator (which may be an NW-TT or a DS-TT) in the first network. The first translator may include or not include a port in a Slave state.

The control device is an upstream device that is in the first network and that is connected to the first translator. For example, refer to FIG. 3. Assuming that the first translator is the translator 1, the control device is the UPF. Assuming that the first translator is the translator 2, the control device is the first UE. Assuming that the first translator is the translator 3, the control device is the second UE.

In this step, at least one second packet is received, where each second packet is used by the control device to perform time synchronization with the clock source that is in the first network, and whether time of the first translator is synchronized with the clock source that is in the first network is determined based on the at least one second packet.

Optionally, the at least one second packet may be the third packet or the fourth packet in the embodiment shown in FIG. 6.

Optionally, for detailed implementation content of determining, based on the at least one second packet, whether the time of the control device is synchronized with the clock source that is in the first network, refer to related content of determining, based on the at least one second packet, whether the time of the first translator is synchronized with the clock source that is in the first network in step 801. Details are not described herein again.

Step 902: When the time of the control device is not synchronized with the clock source that is in the first network, the first translator is controlled to stop sending, to a device communicating with the first translator, time synchronized with a clock source that is in a second network, where the device is located in the second network.

Optionally, the clock source in the second network in this step is a primary clock source in the second network.

When the device is an end station, when receiving the time synchronized with the clock source that is in the second network, the device performs, based on the time, time synchronization with the clock source that is in the second network. When the device is a TSN bridge, after receiving the time synchronized with the clock source that is in the second network, the device sends, to another device that is in the second network and that is connected to the device, the time synchronized with the clock source that is in the second network.

Optionally, in this step, the control device controls the first translator to stop sending the first packet to the device, where a type of the first packet includes an Announce packet, a Sync packet, or a Follow _up packet.

Optionally, in this step, the control device controls the first translator to set a port status of a port that is on the first translator and that communicates with the device to a first status, so as to prevent the port from sending the first packet to the device, where the first status is a faulty state, a listening state, a disabled state, or a specified state.

Optionally, the control device sends a control message to the first translator, where the control message indicates the first translator to set the port status of the port communicating with the device to the first status. In other words, after receiving the control message, the first translator sets the port status of the port that is on the first translator and that communicates with the device to the first status.

In this step, the control device controls the first translator to stop sending, to the device communicating with the first translator, the time synchronized with the clock source that is in the second network. For example, refer to FIG. 1, FIG. 2, FIG. 3, or FIG. 7. It is assumed that the first translator is the translator 1, and an upstream device of the translator 1 is the UPF, that is, the control device is the UPF. The UPF controls the translator 1 to stop sending, to the device 2 communicating with the translator 1, the time synchronized with the clock source that is in the second network. For another example, it is assumed that the first translator is the translator 2, and an upstream device of the translator 2 is the first UE, that is, the control device is the first UE. The first UE controls the translator 2 to stop sending, to the device 3 and the device 4 that communicate with the translator 2, the time synchronized with the clock source that is in the second network.

Optionally, in this step, a fault identifier is sent to a configuration device that is in the first network, where the fault identifier indicates that the time of the first translator is not synchronized with the clock source that is in the first network.

Optionally, in this step, there are the following two manners to set the port status of the port that is on the first translator and that communicates with the device to the first status. The two manners are respectively as follows.

In a first manner, the first translator may be directly controlled to set the port status of the port that is on the first translator and that communicates with the device to the first status.

Optionally, the control message is sent to the first translator, where the control message includes the first status. The first translator receives a configuration command, and sets, based on the control message, the port status of the port that is on the first translator and that communicates with the device to the first status.

Optionally, the fault identifier is further sent to the configuration device that is in the first network.

Optionally, when the first translator includes the port in the Slave state, the fault identifier is used by the configuration device to set a status of a port on a second translator in the first network to a slave Slave state, and the second translator is a translator other than the first translator in the first network.

In a second manner, when triggered by the configuration device, the first translator is controlled to set the port status of the port that is on the first translator and that communicates with the device to the first status. During implementation,
the fault identifier may be first sent to the configuration device that is in the first network, and the configuration command sent by the configuration device based on the fault identifier is received, where the configuration command includes the first status; and the control message including the first status is sent to the first translator. The first translator receives the control message, and sets, based on the control message, the port status of the port that is on the first translator and that communicates with the device to the first status.

Optionally, the configuration device receives the fault identifier, and sends, when triggered by the fault identifier, the configuration command including the first status.

Optionally, when the first translator includes the port in the Slave state, the status of the port is configured as the first status, and the configuration device further sets, when triggered by the fault identifier, a status of a port on a second translator in the first network to a Slave state. The second translator is a translator other than the first translator in the first network.

Optionally, when time recovery of the first translator in the first network is synchronized with the clock source that is in the first network, a recovery identifier is sent to the configuration device that is in the first network, where the recovery identifier indicates that time recovery of the first translator is synchronized with the clock source that is in the first network.

The configuration device receives the recovery identifier, and configures, based on the recovery identifier, a port status of a port on each translator that is in the first network. Optionally, during implementation,
the configuration device notifies the translator that is in the first network. For each translator in the first network, after receiving the notification, the translator sends port datasets of ports that are on the translator to the configuration device.

The configuration device receives port datasets of ports that are on the translator, and configures, based on the port datasets of the ports that are on the translator, a port status of a port on one translator in the first network to a Slave state, and a port status of another port on the translator to a Master state or another state. The configuration device configures port statuses of ports on another translator in the first network to a Master state or another state.

In this embodiment of this application, when the time of the control device of the first translator in the first network is not synchronized with the clock source that is in the first network, the control device controls the first translator to stop sending, to the device communicating with the first translator, the time synchronized with the clock source that is in the second network. In this way, the device cannot receive the time synchronized with the clock source that is in the second network, and does not perform time synchronization with the clock source that is in the second network. Therefore, the device does not generate a time synchronization error, to avoid an error that occurs during time synchronization between the device and the clock source in the second network. Alternatively, the device does not send, to another device that is in the second network and that is connected to the device, the time synchronized with the clock source that is in the second network, so as to avoid an error that occurs during time synchronization between the another device and the clock source in the second network.

Refer to FIG. 10. An embodiment of this application provides a method for processing a time synchronization fault. The method may be applied to the network architecture shown in FIG. 1, FIG. 2, FIG. 3, or FIG. 7. The method may be performed by any translator in a first network or a device in which the translator is located. The translator does not include a Slave port. For ease of description, the translator is referred to as a first translator. The method includes the following steps.

Step 1001: Determine whether the first translator in the first network receives, within a timeout interval, a first packet sent by a second translator that is in the first network, and when the first packet sent by the second translator is not received within the timeout interval, and the second translator includes a Slave port, perform step 1002.

In this step, when it is detected that duration in which the first translator does not receive the first packet sent by the second translator exceeds a length of the timeout interval, it is determined that the first translator does not receive, within the timeout interval, the first packet sent by the second translator.

In the first network, a fault may occur in a network connection from the second translator to the first translator. Consequently, the first packet sent by the second translator is lost, and the first translator does not receive the first packet sent by the second translator.

For example, refer to FIG. 1, FIG. 2, FIG. 3, or FIG. 7. Assuming that the first translator is the translator 2, the second translator is the translator 1, and the first packet is a packet 2 sent by the translator 1. When it is detected that duration in which the translator 2 does not receive the first packet sent by the translator 1 exceeds the length of the timeout interval, it is determined that the translator 2 does not receive, within the timeout interval, the packet 2 sent by the translator 1.

Step 1002: Stop sending, to a device communicating with the first translator, time synchronized with a clock source that is in a second network, where the device is located in the second network, and a type of the first packet includes an announce Announce packet, a synchronization Sync packet, or a follow up Follow_Up packet.

Optionally, the clock source in the second network in this step is a primary clock source in the second network.

For an implementation process of this step, refer to related content in step 802 in the embodiment shown in FIG. 8. Details are not described herein again.

In this embodiment of this application, when the first translator in the first network does not receive, within the timeout interval, the first packet sent by the second translator that is in the first network, sending the time to the device communicating with the first translator is stopped, where the time is synchronized with the clock source that is in the second network. In this way, the device cannot receive the time synchronized with the clock source that is in the second network, and does not perform time synchronization with the clock source that is in the second network. Therefore, the device does not generate a time synchronization error, to avoid an error that occurs during time synchronization between the device and the clock source in the second network. Alternatively, the device does not send, to another device that is in the second network and that is connected to the device, the time synchronized with the clock source that is in the second network, so as to avoid an error that occurs during time synchronization between the another device and the clock source in the second network.

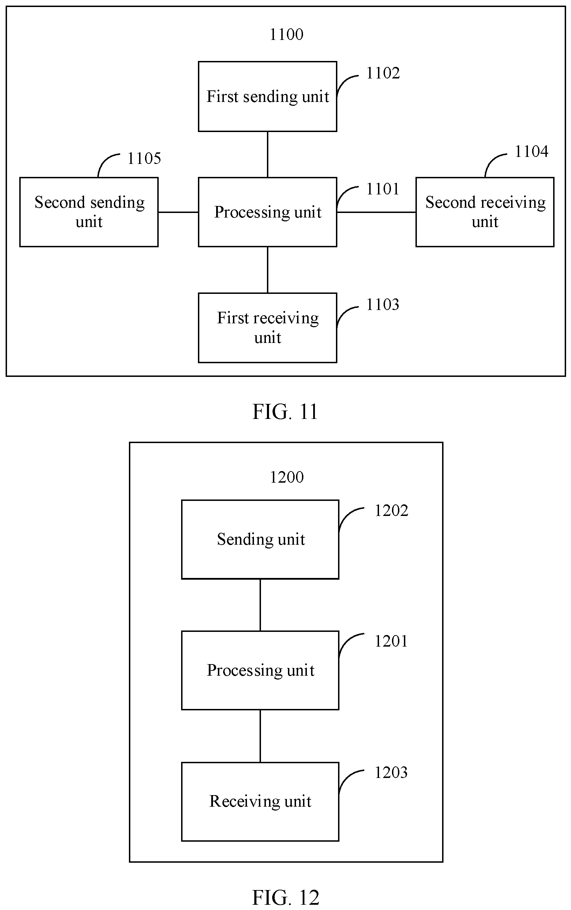

Refer to FIG. 11. An embodiment of this application provides an apparatus 1100 for processing a time synchronization fault. The apparatus 1100 may be deployed in a translator, a device in which the translator is located, or a device that is connected to the translator and that is in a first network in any one of the foregoing embodiments. The apparatus 1100 includes:
a processing unit 1101, configured to: when time of a first translator in a first network is not synchronized with a clock source that is in the first network, stop sending, to a device communicating with the first translator, time synchronized with a clock source that is in a second network, where the device is located in the second network.

Optionally, for a detailed implementation process in which the processing unit 1101 stops sending the time synchronized with the clock source, refer to related content in step 802 in the embodiment shown in FIG. 8. Details are not described herein again.

Optionally, the second network includes a first subnet and a second subnet, the device is located in the first subnet or the second subnet, the clock source in the second network is located in the second subnet, and the first network is connected to the first subnet and the second subnet.

Optionally, the second network is a time sensitive network TSN.

Optionally, the first network is a 5G network.

Optionally, the processing unit 1101 is configured to:
stop sending a first packet to the device, where a type of the first packet is an announce Announce packet, a synchronization Sync packet, or a follow up Follow_up packet.

Optionally, for a detailed implementation process in which the processing unit 1101 stops sending the first packet, refer to related content in step 802 in the embodiment shown in FIG. 8. Details are not described herein again.

Optionally, the processing unit 1101 is configured to:
set a port status of a port that is on the first translator and that communicates with the device to a first status, so as to prevent the port from sending the first packet to the device, where the first status is a faulty state, a listening state, a disabled state, or a specified state.

Optionally, for a detailed implementation process in which the processing unit 1101 sets the port status of the port to the first status, refer to related content in step 802 in the embodiment shown in FIG. 8. Details are not described herein again.

Optionally, the apparatus 1100 further includes a first sending unit 1102 and a first receiving unit 1103.

The first sending unit 1102 is configured to send a fault identifier to a configuration device that is in the first network, where the fault identifier indicates that the time of the first translator is not synchronized with the clock source that is in the first network.

The first receiving unit 1103 is configured to receive the first status that is sent by the configuration device based on the fault identifier.

The processing unit 1101 is configured to set the port status of the port that is on the first translator and that communicates with the device to the first status.

Optionally, the fault identifier is further used by the configuration device to set a status of a port on a second translator in the first network to a slave Slave state.

Optionally, the apparatus 1100 further includes a second receiving unit 1104.

The second receiving unit 1104 is configured to receive a second packet, where the second packet is used by the first translator to perform time synchronization with the clock source that is in the first network.

The processing unit 1101 is further configured to determine, based on the second packet, whether the time of the first translator is synchronized with the clock source that is in the first network.

Optionally, for a detailed implementation process in which the processing unit 1101 determines whether the time of the first translator is synchronized with the clock source that is in the first network, refer to related content in step 801 in the embodiment shown in FIG. 8. Details are not described herein again.

Optionally, the second packet includes a clock class.

The processing unit 1101 is configured to:
when the clock class is lower than a first threshold, determine that the time of the first translator is not synchronized with the clock source that is in the first network.

Optionally, a type of the second packet includes an Announce packet.

Optionally, the second packet is a packet including time information, and the processing unit 1101 is configured to:
when a time deviation that is between the first translator and the clock source in the first network and that is obtained through calculation based on the second packet exceeds a second threshold, determine that the time of the first translator is not synchronized with the clock source that is in the first network.

Optionally, the type of the second packet includes a Sync packet, a Follow_up packet, a delay request Delay _Req packet, a delay response Delay_Resp packet, a peer delay request Pdelay_Req packet, a peer delay response Pdelay_Resp packet, or a peer delay response follow up Pdelay_Resp_Follow_up packet.

Optionally, the processing unit 1101 is further configured to:
when the first translator does not obtain a second packet within a timeout interval, determine that the time of the first translator is not synchronized with the clock source that is in the first network, where the second packet is used by the first translator to perform time synchronization with the clock source that is in the first network.

Optionally, the apparatus 1100 further includes:
a second sending unit 1105, configured to send a recovery identifier to the configuration device that is in the first network, where the recovery identifier indicates that time recovery of the first translator is synchronized with the clock source that is in the first network, and the recovery identifier is used by the configuration device to configure a port status of a port on each translator that is in the first network.

In this embodiment of this application, because the processing unit stops sending, to the device, the time synchronized with the clock source that is in the second network, the device does not receive incorrect time, and therefore does not perform time synchronization with the clock source that is in the second network based on the incorrect time, so that a synchronization error is avoided.

Refer to FIG. 12. An embodiment of this application provides an apparatus 1200 for processing a time synchronization fault. The apparatus 1200 may be deployed in a translator or a device in which the translator is located in any one of the foregoing embodiments, but the translator does not include a port in a Slave state. Refer to FIG. 12, the apparatus 1200 includes:
a processing unit 1201, configured to: when a first translator in a first network does not receive, within a timeout interval, a first packet sent by a second translator that is in the first network, stop sending, to a device communicating with the first translator, time synchronized with a clock source that is in a second network, where the device is located in the second network, and a type of the first packet includes an announce Announce packet, a synchronization Sync packet, or a follow up Follow_Up packet.

Optionally, for a detailed implementation process in which the processing unit 1201 stops sending the time synchronized with the clock source, refer to related content in step 1002 in the embodiment shown in FIG. 10. Details are not described herein again.

Optionally, the processing unit 1201 is configured to:
stop sending a second packet to the device, where a type of the second packet is an announce Announce packet, a synchronization Sync packet, or a follow up Follow_Up packet.

Optionally, for a detailed implementation process in which the processing unit 1201 stops sending the first packet, refer to related content in step 1002 in the embodiment shown in FIG. 10. Details are not described herein again.

Optionally, the processing unit 1201 is configured to:
set a port status of a port that is on the first translator and that communicates with the device to a first status, so as to prevent the port from sending the second packet to the device, where the first status is a faulty state, a listening state, a disabled state, or a specified state.

Optionally, the apparatus 1200 further includes a sending unit 1202 and a receiving unit 1203.

The sending unit 1202 is configured to send a fault identifier to a configuration device that is in the first network, where the fault identifier indicates that time of the first translator is not synchronized with the clock source that is in the first network.

The receiving unit 1203 is configured to receive the first status that is sent by the configuration device based on the fault identifier.

The processing unit 1201 is configured to set the port status of the port that is on the first translator and that communicates with the device to the first status.

Optionally, the fault identifier is further used by the configuration device to set a status of a port on a third translator in the first network to a slave Slave state.

In this embodiment of this application, because the processing unit stops sending, to the device, the time synchronized with the clock source that is in the second network, when the first translator does not receive, within the timeout interval, the first packet sent by the second translator that is in the first network, the first translator knows how to perform processing. In addition, because the processing unit stops sending, to the device, the time synchronized with the clock source that is in the second network, the device does not receive incorrect time. When the device is an end station, time synchronization is not performed, based on the incorrect time, with the clock source that is in the second network, so that a synchronization error is avoided.

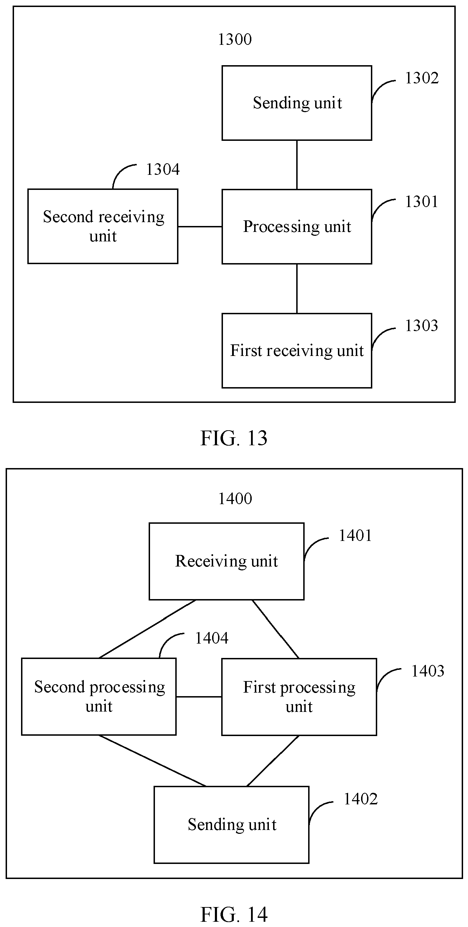

Refer to FIG. 13. An embodiment of this application provides an apparatus 1300 for processing a time synchronization fault. The apparatus 1300 may be deployed on the control device in the embodiment shown in FIG. 9, and includes:
a processing unit 1301, configured to: when time of the apparatus 1300 is not synchronized with a clock source that is in a first network, control a first translator to stop sending, to a device communicating with the first translator, time synchronized with a clock source that is in a second network, where the device is located in the second network.

Optionally, for a detailed implementation process in which the processing unit 1301 stops sending the time synchronized with the clock source, refer to related content in step 901 in the embodiment shown in FIG. 9. Details are not described herein again.

Optionally, the processing unit 1301 is configured to:
control the first translator to stop sending a first packet to the device, where a type of the first packet is an announce Announce packet, a synchronization Sync packet, or a follow up Follow_up packet.

Optionally, for a detailed implementation process in which the processing unit 1301 controls the first translator to stop sending the time synchronized with the clock source, refer to related content in step 901 in the embodiment shown in FIG. 9. Details are not described herein again.

Optionally, the apparatus 1300 further includes a sending unit 1302.

The sending unit 1302 is configured to send a control message to the first translator, where the control message indicates the first translator to set a port status of a port communicating with the device to a first status, so as to prevent the port from sending the first packet to the device, where the first status is a faulty state, a listening state, a disabled state, or a specified state.

Optionally, for a detailed implementation process in which the sending unit 1302 sends the control message, refer to related content in step 902 in the embodiment shown in FIG. 9. Details are not described herein again.

Optionally, the apparatus 1300 further includes a first receiving unit 1303.

The sending unit 1302 is further configured to send a fault identifier to a configuration device that is in the first network, where the fault identifier indicates that the time of the first translator is not synchronized with the clock source that is in the first network.

The first receiving unit 1303 is configured to receive a configuration command sent by the configuration device based on the fault identifier, where the configuration command includes the first status.

The sending unit 1302 is further configured to send the control message to the first translator based on the configuration command.

Optionally, the apparatus 1300 further includes a second receiving unit 1304.

The second receiving unit 1304 is configured to receive a second packet, where the second packet is used by the apparatus 1300 to perform time synchronization with the clock source that is in the first network.

The processing unit 1301 is further configured to determine, based on the second packet, whether the time of the apparatus 1300 is synchronized with the clock source that is in the first network.

In this embodiment of this application, the processing unit controls the first translator to stop sending, to the device communicating with the first translator, the time synchronized with the clock source that is in the second network. In this way, the device does not receive incorrect time, to prevent the device from obtaining the incorrect time. When the device is an end station, the device does not adjust local time of the device based on the incorrect time, so that a synchronization error is avoided.

Refer to FIG. 14. An embodiment of this application provides an apparatus 1400 for processing a time synchronization fault. The apparatus 1400 may be deployed on the configuration device in any embodiment above, and the apparatus 1400 includes:
a receiving unit 1401, configured to receive a fault identifier, where the fault identifier indicates that time of a first translator in a first network is not synchronized with a clock source that is in the first network, or indicates that time of an apparatus of the first translator is not synchronized with the clock source that is in the first network; and
a sending unit 1402, configured to send a configuration command based on the fault identifier, where the configuration command includes a first status, the configuration command is used to set a port status of a port that is on the first translator and that communicates with a device to the first status, so as to prevent the port from sending, to the device, time synchronized with a clock source that is in a second network, and the device is located in the second network.

Optionally, for a detailed implementation process in which the sending unit 1402 sends the configuration command based on the fault identifier, refer to step 802 in the embodiment shown in FIG. 8, refer to related content in step 902 in the embodiment shown in FIG. 9 or step 1002 in the embodiment shown in FIG. 10. Details are not described herein again.

Optionally, the apparatus 1400 further includes:
a first processing unit 1403, configured to set a status of a port on a second translator in the first network to a slave Slave state based on the fault identifier.

Optionally, for a detailed implementation process in which the first processing unit 1403 sets the status of the port on the second translator that is in the first network to the slave Slave state, refer to related content in step 802 in the embodiment shown in FIG. 8, step 902 in the embodiment shown in FIG. 9, or step 1002 in the embodiment shown in FIG. 10. Details are not described herein again.

Optionally, the apparatus 1400 further includes a second processing unit 1404.

The receiving unit 1401 is further configured to receive a recovery identifier, where the recovery identifier indicates that time recovery of the first translator is synchronized with the clock source that is in the first network, or indicates that the time of the apparatus of the first translator is not synchronized with the clock source that is in the first network.

The second processing unit 1404 is configured to configure, based on the recovery identifier, a port status of a port on each translator that is in the first network.

In this embodiment of this application, because the fault identifier indicates that the time of the first translator in the first network is not synchronized with the clock source that is in the first network, or indicates that time of a control device of the first translator is not synchronized with the clock source that is in the first network, the sending unit sends the configuration command based on the fault identifier, where the configuration command includes the first status, the configuration command is used to set the port status of the port that is on the first translator and that communicates with the device to the first status, so as to prevent the port from sending, to the device, the time synchronized with the clock source that is in the second network. In this way, the device does not receive incorrect time, to prevent the device from obtaining the incorrect time. When the device is an end station, the device does not adjust local time of the device based on the incorrect time, so that a synchronization error is avoided.

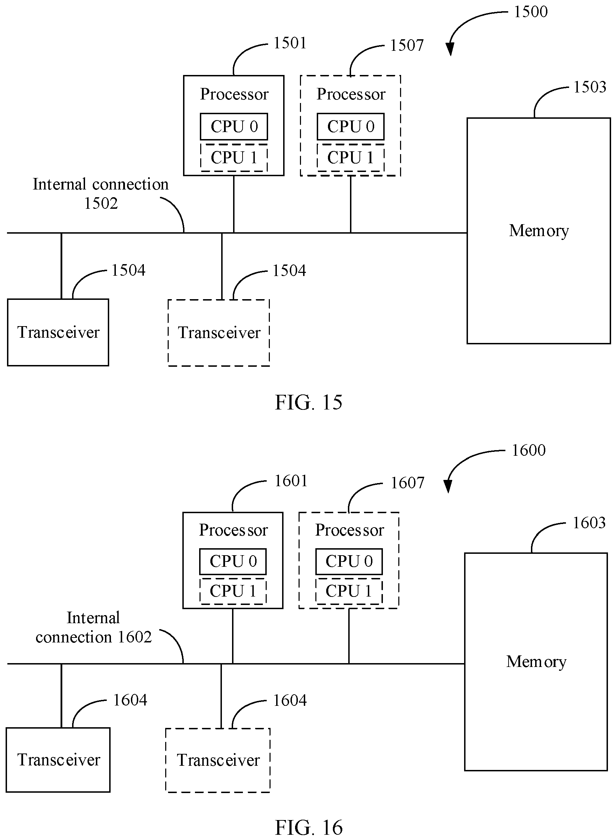

FIG. 15 is a schematic diagram of an apparatus 1500 for processing a time synchronization fault according to an embodiment of this application. The apparatus 1500 may be the first translator in any one of the foregoing embodiments. The apparatus 1500 includes at least one processor 1501, an internal connection 1502, a memory 1503, and at least one transceiver 1504.

The apparatus 1500 is an apparatus of a hardware structure, and may be configured to implement the functional module in the apparatus 1100 in FIG. 11 or configured to implement the functional module in the apparatus 1200 in FIG. 12. For example, a person skilled in the art may figure out that the processing unit 1101 in the apparatus 1100 shown in FIG. 11 may be implemented by the at least one processor 1501 by invoking code in the memory 1503, and the first sending unit 1102, the first receiving unit 1103, and the second receiving unit 1104 in the apparatus 1100 shown in FIG. 11 may be implemented by the transceiver 1504. For another example, a person skilled in the art may figure out that the processing unit 1201 in the apparatus 1200 shown in FIG. 12 may be implemented by the at least one processor 1501 by invoking code in the memory 1503, and the sending unit 1202 and the receiving unit 1203 in the apparatus 1200 shown in FIG. 12 may be implemented by the transceiver 1504.

Optionally, the apparatus 1500 may be further configured to implement a function of the first translator or a device in which the first translator is located in any one of the foregoing embodiments.

Optionally, the processor 1501 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of solutions of this application.

The internal connection 1502 may include a path for transmitting information between the foregoing components. Optionally, the internal connection 1502 is a board, a bus, or the like.

The transceiver 1504 is configured to communicate with another device or a communication network.

The memory 1503 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer, but is not limited thereto. The memory may exist independently, and is connected to the processor through the bus. The memory may alternatively be integrated with the processor.

The memory 1503 is configured to store application program code for executing the solutions in this application, and the processor 1501 controls the execution. The processor 1501 is configured to execute the application program code stored in the memory 1503, and cooperate with the at least one transceiver 1504, so that the apparatus 1500 implements functions in the method in this patent.

During specific implementation, in an embodiment, the processor 1501 may include one or more CPUs, for example, a CPU 0 and a CPU 1 in FIG. 15.

During specific implementation, in an embodiment, the apparatus 1500 may include a plurality of processors, for example, the processor 1501 and a processor 1507 shown in FIG. 15. Each of the processors may be a single-core (single-CPU) processor, or may be a multi-core (multi-CPU) processor. The processor herein may be one or more devices, circuits, and/or processing cores configured to process data (for example, computer program instructions).

FIG. 16 is a schematic diagram of an apparatus 1600 for processing a time synchronization fault according to an embodiment of this application. The apparatus 1600 may be the control device of the first translator in any one of the foregoing embodiments. The apparatus 1600 includes at least one processor 1601, an internal connection 1602, a memory 1603, and at least one transceiver 1604.

The apparatus 1600 is an apparatus of a hardware structure, and may be configured to implement functional modules in the apparatus 1300 shown in FIG. 13. For example, a person skilled in the art may figure out that the processing unit 1301 in the apparatus 1300 shown in FIG. 13 may be implemented by the at least one processor 1601 by invoking code in the memory 1603, and the sending unit 1302, the first receiving unit 1303, and the second receiving unit 1304 in the apparatus 1300 shown in FIG. 13 may be implemented by the transceiver 1604.

Optionally, the apparatus 1600 may be further configured to implement a function of the control device of the first translator in the foregoing embodiment shown in FIG. 9.

Optionally, the processor 1601 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of solutions of this application.

The internal connection 1602 may include a path for transmitting information between the foregoing components. Optionally, the internal connection 1602 is a board, a bus, or the like.

The transceiver 1604 is configured to communicate with another device or a communication network.

The memory 1603 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer, but is not limited thereto. The memory may exist independently, and is connected to the processor through the bus. The memory may alternatively be integrated with the processor.

The memory 1603 is configured to store application program code for executing the solutions in this application, and the processor 1601 controls the execution. The processor 1601 is configured to execute the application program code stored in the memory 1603, and cooperate with the at least one transceiver 1604, so that the apparatus 1600 implements functions in the method in this patent.

During specific implementation, in an embodiment, the processor 1601 may include one or more CPUs, for example, a CPU 0 and a CPU 1 in FIG. 16.

During specific implementation, in an embodiment, the apparatus 1600 may include a plurality of processors, for example, the processor 1601 and a processor 1607 shown in FIG. 16. Each of the processors may be a single-core (single-CPU) processor, or may be a multi-core (multi-CPU) processor. The processor herein may be one or more devices, circuits, and/or processing cores configured to process data (for example, computer program instructions).

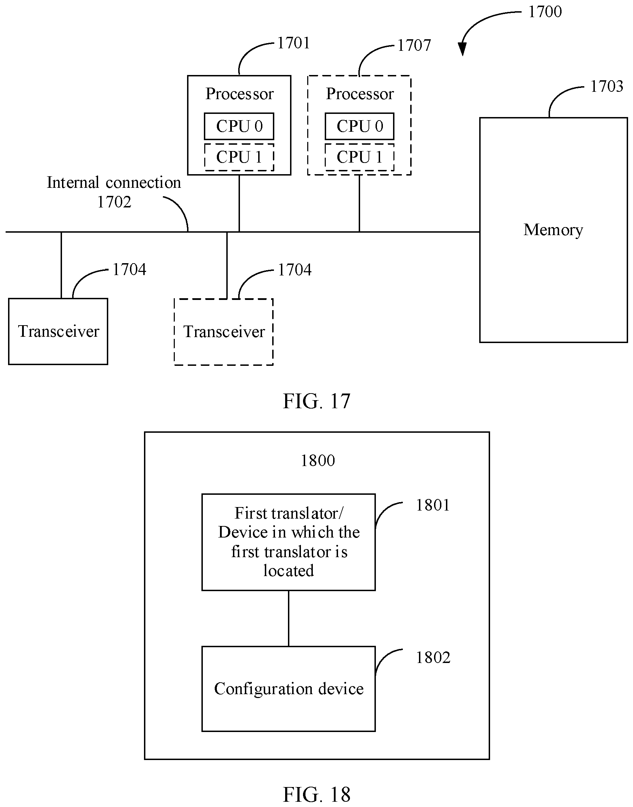

FIG. 17 is a schematic diagram of an apparatus 1700 for processing a time synchronization fault according to an embodiment of this application. The apparatus 1700 may be the configuration device in any one of the foregoing embodiments. The apparatus 1700 includes at least one processor 1701, an internal connection 1702, a memory 1703, and at least one transceiver 1704.

The apparatus 1700 is an apparatus of a hardware structure, and may be configured to implement functional modules in the apparatus 1400 shown in FIG. 14. For example, a person skilled in the art may figure out that the first processing unit 1403 and the second processing unit 1404 in the apparatus 1400 shown in FIG. 14 may be implemented by the at least one processor 1701 by invoking code in the memory 1703, and the receiving unit 1401 and the sending unit 1402 in the apparatus 1400 shown in FIG. 14 may be implemented by the transceiver 1704.

Optionally, the apparatus 1700 may be further configured to implement a function of the configuration device in the embodiment shown in FIG. 8, 9, or 10.

Optionally, the processor 1701 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of solutions of this application.

The internal connection 1702 may include a path for transmitting information between the foregoing components. Optionally, the internal connection 1702 is a board, a bus, or the like.

The transceiver 1704 is configured to communicate with another device or a communication network.

The memory 1703 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer, but is not limited thereto. The memory may exist independently, and is connected to the processor through the bus. The memory may alternatively be integrated with the processor.

The memory 1703 is configured to store application program code for executing the solutions in this application, and the processor 1701 controls the execution. The processor 1701 is configured to execute the application program code stored in the memory 1703, and cooperate with the at least one transceiver 1704, so that the apparatus 1700 implements functions in the method in this patent.

During specific implementation, in an embodiment, the processor 1701 may include one or more CPUs, for example, a CPU 0 and a CPU 1 in FIG. 17.

During specific implementation, in an embodiment, the apparatus 1700 may include a plurality of processors, for example, the processor 1701 and a processor 1707 shown in FIG. 17. Each of the processors may be a single-core (single-CPU) processor, or may be a multi-core (multi-CPU) processor. The processor herein may be one or more devices, circuits, and/or processing cores configured to process data (for example, computer program instructions).

Refer to FIG. 18. An embodiment of this application provides a system 1800 for processing a time synchronization fault. The system 1800 includes the apparatus 11 shown in FIG. 11 and the apparatus 14 shown in FIG. 14, or the system 1800 includes the apparatus 12 shown in FIG. 12 and the apparatus 14 shown in FIG. 14, or the system 1800 includes the apparatus 15 shown in FIG. 15 and the apparatus 17 shown in FIG. 17.

Refer to FIG. 18. The apparatus 11 shown in FIG. 11, the apparatus 12 shown in FIG. 12, or the apparatus 15 shown in FIG. 15 is a first translator 1801 or a device 1801 in which the first translator is located, and the apparatus 14 shown in FIG. 14 or the apparatus 17 shown in FIG. 17 is a configuration device 1802.

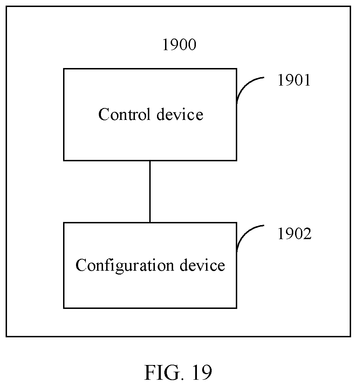

Refer to FIG. 19, an embodiment of this application provides a system 1900 for processing a time synchronization fault. The system 1900 includes the apparatus 13 shown in FIG. 13 and the apparatus 14 shown in FIG. 14, or the system 1800 includes the apparatus 16 shown in FIG. 16 and the apparatus 17 shown in FIG. 17.

Refer to FIG. 19. The apparatus 13 shown in FIG. 13 or the apparatus 16 shown in FIG. 16 is a control device 1901 of the first translator, and the apparatus 14 shown in FIG. 14 or the apparatus 17 shown in FIG. 17 is a configuration device 1902.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

The foregoing descriptions are only optional embodiments of this application, but are not intended to limit this application. Any modification, equivalent replacement, or improvement made within the principle of this application should fall within the protection scope of this application.

## Claims

1. A method for processing a time synchronization fault, wherein the method comprises:
when time of a first translator in a first network is not synchronized with a clock source that is in the first network, stopping sending, to a device communicating with the first translator, time synchronized with a clock source that is in a second network, wherein the device is located in the second network.

2. The method according to claim 1, wherein the second network comprises a first subnet and a second subnet, the device is located in the first subnet or the second subnet, the clock source in the second network is located in the second subnet, and the first network is connected to the first subnet and the second subnet.

3. The method according to claim 1 or 2, wherein the second network is a time sensitive network TSN.

4. The method according to any one of claims 1 to 3, wherein the first network is a 5G network.

5. The method according to any one of claims 1 to 4, wherein the stopping sending, to a device communicating with the first translator, time synchronized with a clock source that is in a second network comprises:
stopping sending a first packet to the device, wherein a type of the first packet is an announce Announce packet, a synchronization Sync packet, or a follow up Follow _up packet.

6. The method according to claim 5, wherein the stopping sending a first packet to the device comprises:
setting a port status of a port that is on the first translator and that communicates with the device to a first status, so as to prevent the port from sending the first packet to the device, wherein the first status is a faulty state, a listening state, a disabled state, or a specified state.

7. The method according to claim 6, wherein the setting a port status of a port that is on the first translator and that communicates with the device to a first status comprises:
sending a fault identifier to a configuration device that is in the first network, wherein the fault identifier indicates that the time of the first translator is not synchronized with the clock source that is in the first network;
receiving a configuration command sent by the configuration device based on the fault identifier, wherein the configuration command comprises the first status; and
setting the port status of the port that is on the first translator and that communicates with the device to the first status.

8. The method according to claim 7, wherein the fault identifier is further used by the configuration device to set a status of a port on a second translator in the first network to a slave Slave state.

9. The method according to any one of claims 1 to 8, wherein the method further comprises:
receiving a second packet, wherein the second packet is used by the first translator to perform time synchronization with the clock source that is in the first network; and
determining, based on the second packet, whether the time of the first translator is synchronized with the clock source that is in the first network.

10. The method according to claim 9, wherein the second packet comprises a clock class, and
the determining, based on the second packet, whether the time of the first translator is synchronized with the clock source that is in the first network comprises:
when the clock class is lower than a first threshold, determining that the time of the first translator is not synchronized with the clock source that is in the first network.

11. The method according to claim 9, wherein the second packet is a packet carrying time information, and
the determining, based on the second packet, whether the time of the first translator is synchronized with the clock source that is in the first network comprises:
when a time deviation that is between the first translator and the clock source in the first network and that is obtained through calculation based on the second packet exceeds a second threshold, determining that the time of the first translator is not synchronized with the clock source that is in the first network.

12. The method according to any one of claims 1 to 8, wherein the method further comprises:
when the first translator does not obtain a second packet within a timeout interval, determining that the time of the first translator is not synchronized with the clock source that is in the first network, wherein the second packet is used by the first translator to perform time synchronization with the clock source that is in the first network.

13. The method according to any one of claims 1 to 12, wherein the method further comprises:
sending a recovery identifier to the configuration device that is in the first network, wherein the recovery identifier indicates that time recovery of the first translator is synchronized with the clock source that is in the first network, and the recovery identifier is used by the configuration device to configure a port status of a port on each translator that is in the first network.

14. A method for processing a time synchronization fault, wherein the method comprises:
when time of a control device of a first translator is not synchronized with a clock source that is in a first network, controlling, by the control device of the first translator, the first translator to stop sending, to a device communicating with the first translator, time synchronized with a clock source that is in a second network, wherein the device is located in the second network.

15. The method according to claim 14, wherein the controlling the first translator to stop sending, to a device communicating with the first translator, time synchronized with a clock source that is in a second network comprises:
controlling the first translator to stop sending a first packet to the device, wherein a type of the first packet is an announce Announce packet, a synchronization Sync packet, or a follow up Follow_up packet.

16. The method according to claim 15, wherein the controlling the first translator to stop sending a first packet to the device comprises:
sending a control message to the first translator, wherein the control message indicates the first translator to set a port status of a port communicating with the device to a first status, so as to prevent the port from sending the first packet to the device, wherein the first status is a faulty state, a listening state, a disabled state, or a specified state.

17. The method according to claim 16, further comprising:
sending a fault identifier to a configuration device that is in the first network, wherein the fault identifier indicates that time of the first translator is not synchronized with the clock source that is in the first network;
receiving a configuration command sent by the configuration device based on the fault identifier, wherein the configuration command comprises the first status; and
the sending a control message to the first translator comprises:
sending the control message to the first translator based on the configuration command.

18. The method according to any one of claims 14 to 17, wherein the method further comprises:
receiving a second packet, wherein the second packet is used by the control device to perform time synchronization with the clock source that is in the first network; and
determining, based on the second packet, whether the time of the control device is synchronized with the clock source that is in the first network.

19. A method for processing a time synchronization fault, wherein the method comprises:
when a first translator in a first network does not receive, within a timeout interval, a first packet sent by a second translator that is in the first network, stopping sending, to a device communicating with the first translator, time synchronized with a clock source that is in a second network, wherein the device is located in the second network, and a type of the first packet comprises an announce Announce packet, a synchronization Sync packet, or a follow up Follow _Up packet.

20. The method according to claim 19, wherein the stopping sending, to a device communicating with the first translator, time synchronized with a clock source that is in a second network comprises:
stopping sending a second packet to the device, wherein a type of the second packet is an announce Announce packet, a synchronization Sync packet, or a follow up Follow_Up packet.

21. The method according to claim 20, wherein the stopping sending a second packet to the device comprises:
setting a port status of a port that is on the first translator and that communicates with the device to a first status, so as to prevent the port from sending the second packet to the device, wherein the first status is a faulty state, a listening state, a disabled state, or a specified state.

22. The method according to claim 21, wherein the setting a port status of a port that is on the first translator and that communicates with the device to a first status comprises:
sending a fault identifier to a configuration device that is in the first network, wherein the fault identifier indicates that time of the first translator is not synchronized with a clock source that is in the first network;
receiving a configuration command sent by the configuration device based on the fault identifier, wherein the configuration command comprises the first status; and
setting the port status of the port that is on the first translator and that communicates with the device to the first status.

23. The method according to claim 22, wherein the fault identifier is further used by the configuration device to set a status of a port on a third translator in the first network to a slave Slave state.

24. A method for processing a time synchronization fault, wherein the method comprises:
receiving, by a configuration device, a fault identifier, wherein the fault identifier indicates that time of a first translator in a first network is not synchronized with a clock source that is in the first network, or indicates that time of a control device of the first translator is not synchronized with the clock source that is in the first network; and
sending, by the configuration device, a configuration command based on the fault identifier, wherein the configuration command comprises a first status, the configuration command is used to set a port status of a port that is on the first translator and that communicates with a device to the first status, so as to prevent the port from sending, to the device, time synchronized with a clock source that is in a second network, and the device is located in the second network.

25. The method according to claim 24, wherein the method further comprises:
setting a status of a port on a second translator in the first network to a slave Slave state based on the fault identifier.

26. The method according to claim 24 or 25, wherein the method further comprises:
receiving a recovery identifier, wherein the recovery identifier indicates that time recovery of the first translator is synchronized with the clock source that is in the first network, or indicates that the time of the control device of the first translator is not synchronized with the clock source that is in the first network; and
configuring, based on the recovery identifier, a port status of a port on each translator that is in the first network.

27. An apparatus for processing a time synchronization fault, wherein the apparatus comprises:
a processing unit, configured to: when time of a first translator in a first network is not synchronized with a clock source that is in the first network, stop sending, to a device communicating with the first translator, time synchronized with a clock source that is in a second network, wherein the device is located in the second network.

28. The apparatus according to claim 27, wherein the second network comprises a first subnet and a second subnet, the device is located in the first subnet or the second subnet, the clock source in the second network is located in the second subnet, and the first network is connected to the first subnet and the second subnet.

29. The apparatus according to claim 27 or 28, wherein the second network is a time sensitive network TSN.

30. The apparatus according to any one of claims 27 to 29, wherein the first network is a 5G network.

31. The apparatus according to any one of claims 27 to 30, wherein the processing unit is configured to:
stop sending a first packet to the device, wherein a type of the first packet is an announce Announce packet, a synchronization Sync packet, or a follow up Follow_up packet.

32. The apparatus according to claim 31, wherein the processing unit is configured to:
set a port status of a port that is on the first translator and that communicates with the device to a first status, so as to prevent the port from sending the first packet to the device, wherein the first status is a faulty state, a listening state, a disabled state, or a specified state.

33. The apparatus according to claim 32, wherein the apparatus further comprises a first sending unit and a first receiving unit, wherein
the first sending unit is configured to send a fault identifier to a configuration device that is in the first network, wherein the fault identifier indicates that the time of the first translator is not synchronized with the clock source that is in the first network; and
the first receiving unit is configured to receive the first status that is sent by the configuration device based on the fault identifier.

34. The apparatus according to claim 33, wherein the fault identifier is further used by the configuration device to set a status of a port on a second translator in the first network to a slave Slave state.

35. The apparatus according to any one of claims 27 to 34, wherein the apparatus further comprises a second receiving unit, wherein
the second receiving unit is configured to receive a second packet, wherein the second packet is used by the first translator to perform time synchronization with the clock source that is in the first network; and
the processing unit is further configured to determine, based on the second packet, whether the time of the first translator is synchronized with the clock source that is in the first network.

36. The apparatus according to claim 35, wherein the second packet comprises a clock class, and
the processing unit is configured to:
when the clock class is lower than a first threshold, determine that the time of the first translator is not synchronized with the clock source that is in the first network.

37. The apparatus according to claim 35, wherein the second packet is a packet carrying time information, and
the processing unit is configured to:
when a time deviation that is between the first translator and the clock source in the first network and that is obtained through calculation based on the second packet exceeds a second threshold, determine that the time of the first translator is not synchronized with the clock source that is in the first network.

38. The apparatus according to any one of claims 27 to 34, wherein the processing unit is further configured to:
when the first translator does not obtain a second packet within a timeout interval, determine that the time of the first translator is not synchronized with the clock source that is in the first network, wherein the second packet is used by the first translator to perform time synchronization with the clock source that is in the first network.

39. The apparatus according to any one of claims 27 to 38, wherein the apparatus further comprises:
a second sending unit, configured to send a recovery identifier to the configuration device that is in the first network, wherein the recovery identifier indicates that time recovery of the first translator is synchronized with the clock source that is in the first network, and the recovery identifier is used by the configuration device to configure a port status of a port on each translator that is in the first network.

40. An apparatus for processing a time synchronization fault, wherein the apparatus comprises:
a processing unit, configured to: when time of the apparatus is not synchronized with a clock source that is in a first network, control a first translator to stop sending, to a device communicating with the first translator, time synchronized with a clock source that is in a second network, wherein the device is located in the second network.

41. The apparatus according to claim 40, wherein the processing unit is configured to:
control the first translator to stop sending a first packet to the device, wherein a type of the first packet is an announce Announce packet, a synchronization Sync packet, or a follow up Follow_up packet.

42. The apparatus according to claim 41, wherein the apparatus further comprises a sending unit, wherein
the sending unit is configured to send a control message to the first translator, wherein the control message indicates the first translator to set a port status of a port communicating with the device to a first status, so as to prevent the port from sending the first packet to the device, wherein the first status is a faulty state, a listening state, a disabled state, or a specified state.

43. The apparatus according to claim 42, further comprising a first receiving unit, wherein
the sending unit is further configured to send a fault identifier to a configuration device that is in the first network, wherein the fault identifier indicates that time of the first translator is not synchronized with the clock source that is in the first network;
the first receiving unit is configured to receive a configuration command sent by the configuration device based on the fault identifier, wherein the configuration command comprises the first status; and
the sending unit is further configured to send the control message to the first translator based on the configuration command.

44. The apparatus according to any one of claims 40 to 43, wherein the apparatus further comprises a second receiving unit, wherein
the second receiving unit is configured to receive a second packet, wherein the second packet is used by the apparatus to perform time synchronization with the clock source that is in the first network; and
the processing unit is further configured to determine, based on the second packet, whether the time of the apparatus is synchronized with the clock source that is in the first network.

45. An apparatus for processing a time synchronization fault, wherein the apparatus comprises:
a processing unit, configured to: when a first translator in a first network does not receive, within a timeout interval, a first packet sent by a second translator that is in the first network, stop sending, to a device communicating with the first translator, time synchronized with a clock source that is in a second network, wherein the device is located in the second network, and a type of the first packet comprises an announce Announce packet, a synchronization Sync packet, or a follow up Follow_Up packet.

46. The apparatus according to claim 45, wherein the processing unit is configured to:
stop sending a second packet to the device, wherein a type of the second packet is an announce Announce packet, a synchronization Sync packet, or a follow up Follow_Up packet.

47. The apparatus according to claim 46, wherein the processing unit is configured to:
set a port status of a port that is on the first translator and that communicates with the device to a first status, so as to prevent the port from sending the second packet to the device, wherein the first status is a faulty state, a listening state, a disabled state, or a specified state.

48. The apparatus according to claim 47, wherein the apparatus further comprises a sending unit and a receiving unit, wherein
the sending unit is configured to send a fault identifier to a configuration device that is in the first network, wherein the fault identifier indicates that time of the first translator is not synchronized with a clock source that is in the first network;
the receiving unit is configured to receive the first status that is sent by the configuration device based on the fault identifier; and
the processing unit is configured to set the port status of the port that is on the first translator and that communicates with the device to the first status.

49. The apparatus according to claim 48, wherein the fault identifier is further used by the configuration device to set a status of a port on a third translator in the first network to a slave Slave state.

50. An apparatus for processing a time synchronization fault, wherein the apparatus comprises:
a receiving unit, configured to receive a fault identifier, wherein the fault identifier indicates that time of a first translator in a first network is not synchronized with a clock source that is in the first network, or indicates that time of an apparatus of the first translator is not synchronized with the clock source that is in the first network; and
a sending unit, configured to send a configuration command based on the fault identifier, wherein the configuration command comprises a first status, the configuration command is used to set a port status of a port that is on the first translator and that communicates with a device to the first status, so as to prevent the port from sending, to the device, time synchronized with a clock source that is in a second network, and the device is located in the second network.

51. The apparatus according to claim 50, wherein the apparatus further comprises:
a first processing unit, configured to set a status of a port on a second translator in the first network to a slave Slave state based on the fault identifier.

52. The apparatus according to claim 50 or 51, wherein the apparatus further comprises a second processing unit, wherein
the receiving unit is further configured to receive a recovery identifier, wherein the recovery identifier indicates that time recovery of the first translator is synchronized with the clock source that is in the first network, or indicates that the time of the apparatus of the first translator is not synchronized with the clock source that is in the first network; and
the second processing unit is configured to configure, based on the recovery identifier, a port status of a port on each translator that is in the first network.

53. A system for processing a time synchronization fault, wherein the system comprises the apparatus according to any one of claims 27 to 49 and the apparatus according to any one of claims 50 to 52.

54. A computer-readable storage medium, storing a computer program, wherein when the computer program is executed by a computer, the method according to any one of claims 1 to 26 is implemented.

55. A computer program product, wherein the computer program product comprises a computer program stored in a computer-readable storage medium, and the computer program is loaded by a processor to implement the method according to any one of claims 1 to 26.
